# EUROPEAN PATENT SPECIFICATION

(11) **EP 2 752 293 B1**
(45) Date of publication and mention of the grant of the patent: **10.10.2018**
(21) Application number: 12827241.6
(22) Date of filing: 30.08.2012
(51) Int. Cl.: B32B 27/20, C08K 3/04, C08K 7/00, C08L 69/00, C08L 101/00

(54) **MULTILAYERED RESIN MOLDING BODY AND METHOD FOR MANUFACTURING SAME**
MEHRSCHICHTIGER HARZFORMKÖRPER UND VERFAHREN ZU SEINER HERSTELLUNG
CORPS DE MOULAGE EN RÉSINE MULTICOUCHE ET SON PROCÉDÉ DE FABRICATION

(30) Priority: 31.08.2011 JP 2011189527; 31.08.2011 JP 2011189529; 31.08.2011 JP 2011189530; 13.01.2012 JP 2012004690; 17.05.2012 JP 2012113592; 22.05.2012 JP 2012116681; 06.07.2012 JP 2012152230; 06.07.2012 JP 2012152708; 24.07.2012 JP 2012163294
(43) Date of publication of application: 09.07.2014
(73) Proprietor: Sekisui Chemical Co., Ltd., Osaka-shi, Osaka 530-8565 (JP)
(72) Inventor: TSUMURA, Kensuke, Mishima-gun Osaka 618-0021 (JP); SAWA, Kazuhiro, Mishima-gun Osaka 618-0021 (JP); TAKAHASHI, Katsunori, Mishima-gun Osaka 618-0021 (JP); INUI, Yoshihiro, Mishima-gun Osaka 618-0021 (JP); INUI, Nobuhiko, Mishima-gun Osaka 618-0021 (JP); TANIGUCHI, Koji, Hasuda-shi Saitama 349-0101 (JP)
(74) Representative: Ter Meer Steinmeister & Partner
(86) International application number: PCT/JP2012/071991
(87) International publication number: WO 2013/031883

(56) References cited:
- WO-A1-2011/040266
- JP-A- H1 060 287
- JP-A- 2005 238 708
- JP-A- 2006 312 677
- JP-A- 2006 326 891
- JP-A- 2007 334 150
- JP-A- 2009 149 769
- DATABASE WPI Week 200444 Thomson Scientific, London, GB; AN 2004-463126 XP002738096, -& JP 2004 148634 A (TOPPAN PRINTING CO LTD) 27 May 2004 (2004-05-27)

## Description

### Technical Field

The present invention relates to a multilayered resin molded body in which a filler is dispersed in a thermoplastic resin, and a method for manufacturing the same, and particularly to a multilayered resin molded body in which a filler comprising a carbon material having a graphene structure is dispersed in a thermoplastic resin, and a method for manufacturing the same.

### Background Art

In recent years, resin molded bodies having high mechanical strength such as elastic modulus have been strongly required. As materials of the resin molded bodies having high mechanical strength, for example, resin composite materials in which a filler having dimensions of several nm to several tens nm is dispersed in a thermoplastic resin have attracted attention. As such nano-level fillers, carbon carbon fibers, multi-walled carbon nanotubes, carbon fibers, exfoliated graphene, clay, and the like are known.

In order to effectively increase the mechanical strength of resin molded bodies comprising the above resin composite materials, it is necessary to orient the nano-level filler as described above in one direction in the resin molded body. For example, the following Patent Literature 1 discloses a method for orienting a filler comprising a carbon material in a matrix by extruding a mixture of the filler comprising a carbon material and the matrix in the form of fibers, and solidifying the molded materials in the form of fibers with the directions of the molded materials aligned. In addition, the following Patent Literature 2 discloses a method for orienting a filler comprising a carbon material in a particular direction in a matrix by applying an electric field to a mixture of the filler and the matrix, and a connected film obtained by orienting a filler by the method.

### Citation List

### Patent Literature

Patent Literature 1: U.S. Patent No. 7186092
Patent Literature 2: Japanese Patent Laid-Open No. 2006-312677

### Summary of Invention

### Technical Problem

However, in resin molded bodies obtained by orienting nano-level fillers by the methods of Patent Literatures 1 and 2, the orientability of the above fillers is low. Therefore, a problem has been that the mechanical strength of the resin molded bodies is not sufficiently increased.

It is an object of the present invention to provide a multilayered resin molded body having high filler orientability and high mechanical strength, and a method for manufacturing the same.

### Solution to Problem

The multilayered resin molded body of the present invention comprises a plurality of laminated resin composition layers comprising a thermoplastic resin and a filler comprising a carbon material having a graphene structure, the filler being dispersed in the thermoplastic resin. In the multilayered resin molded body of the present invention, an angle formed by a longitudinal direction of each of the above fillers and a direction that is an average of longitudinal directions of all of the above fillers is 6° or less.

In a particular aspect of the multilayered resin molded body of the present invention, a thickness per layer of the plurality of resin composition layers is 1 to 3 times a thickness of the above filler. In this case, the above filler is oriented in a direction parallel to the layer planes of the above resin composition layers, and therefore, the orientability of the above filler can be further increased. Therefore, the mechanical strength of the multilayered resin molded body can be further increased.

In another particular aspect of the multilayered resin molded body of the present invention, an aspect ratio of the carbon material having a graphene structure is in the range of 10 to 500. In this case, the reinforcing effect of the above carbon material having a graphene structure against an external force applied in a direction crossing the lamination planes can be effectively increased.

In another particular aspect of the multilayered resin molded body of the present invention, the carbon material having a graphene structure is at least one selected from the group consisting of exfoliated graphite, carbon fibers, and carbon nanotubes. In this case, the exfoliated graphite has a nanosize and a large specific surface area. Therefore, the mechanical strength of the multilayered resin molded body can be further increased.

In still another particular aspect of the multilayered resin molded body of the present invention, the thermoplastic resin is at least one selected from the group consisting of polyolefin-based resins, polyamides, and ABS resins. In this case, by using widely used polyolefin-based resins, the cost of the multilayered resin molded body can be reduced.

In still another particular aspect of the multilayered resin molded body of the present invention, the filler is contained in a proportion of 1 to 50 parts by weight based on 100 parts by weight of the thermoplastic resin. In this case, the mechanical strength of the multilayered resin molded body can be more effectively increased.

In still another particular aspect of the multilayered resin molded body of the present invention, a shape of the multilayered resin molded body is a sheet shape. In this case, by laminating a plurality of sheet-shaped resin composition layers, the multilayered resin molded body can be easily molded.

In another particular aspect of the multilayered resin molded body of the present invention, the multilayered resin molded body is a multilayered resin molded body comprising a plurality of laminated resin composition layers comprising a thermoplastic resin and a filler comprising a carbon material having a graphene structure, the filler being dispersed in the thermoplastic resin, wherein a thickness per layer of the plurality of resin composition layers, t, is α < t ≤ 15α when the thickness of the filler is α. This multilayered resin molded body is a multilayered resin molded body comprising a plurality of laminated resin composition layers in which a filler comprising a carbon material having a graphene structure is dispersed in a thermoplastic resin, wherein a thickness per layer of the above plurality of resin composition layers, t, is α < t ≤ 15α when the thickness of the above filler is α. Therefore, the above filler is present in the resin composition layers without disordering the layer interfaces. Therefore, in this multilayered resin molded body, the resin composition layers are laminated without disorder. Thus, a multilayered resin molded body having effectively increased mechanical strength can be provided.

In another particular aspect of the multilayered resin molded body of the present invention, the thickness per layer of the plurality of resin composition layers is in the range of 0.01 µm to 2.0 µm. In this case, the mechanical strength of the multilayered resin molded body can be more reliably increased.

In another particular aspect of the multilayered resin molded body of the present invention, the multilayered resin molded body comprises a plurality of first resin composition layers comprising a first thermoplastic resin and a filler comprising a carbon material having a graphene structure, the filler being dispersed in the first thermoplastic resin; and a plurality of second resin composition layers comprising a second thermoplastic resin as a main component, the plurality of first resin composition layers and the plurality of second resin composition layers being laminated. In the multilayered resin molded body of the present invention, a filler comprising a carbon material having a graphene structure is not contained in the second resin composition layer, or X > Y holds when an amount of the filler comprising a carbon material contained in the first resin composition layer is X, and an amount of the filler comprising a carbon material contained in the second resin composition layer is Y. The amount of the filler comprising a carbon material having a graphene structure dispersed in the first resin composition layer is larger than the amount of the filler comprising a carbon material having a graphene structure contained in the second resin composition layer, and therefore, the mechanical strength of the first resin composition layer is increased. In the multilayered resin molded body of the present invention, the plurality of first resin composition layers and the plurality of second resin composition layers are laminated, and therefore, the mechanical strength of the entire multilayered resin molded body can be increased by the mechanical strength of the first resin composition layers. Therefore, the mechanical strength of the multilayered resin molded body can be further increased with a smaller amount of the filler added. In addition, according to a method for manufacturing this multilayered resin molded body, multilayer molding is performed by forming a laminate of a first layer and a second layer by coextrusion, and then dividing the above laminate and further laminating the above divided laminates, and therefore, the multilayered resin molded body 5 of the present invention in which a large number of the plurality of first resin composition layers and the plurality of second resin composition layers are laminated can be efficiently manufactured.

In still another particular aspect of the multilayered resin molded body of the present invention, the plurality of first resin composition layers and the plurality of second resin composition layers are alternately laminated. In this case, the mechanical strength of the multilayered resin molded body can be further increased.

In still another particular aspect of the multilayered resin molded body of the present invention, the second resin composition layer does not comprise a filler comprising a carbon material having a graphene structure. In this case, the amount of the filler comprising a carbon material having a graphene structure used in the multilayered resin molded body can be efficiently decreased without decreasing the mechanical strength of the multilayered resin molded body much.

In another particular aspect of the multilayered resin molded body of the present invention, the multilayered resin molded body comprises a laminate comprising five or more laminated first layers comprising a thermoplastic resin, wherein at least one of the plurality of the above first layers comprises a filler. This multilayered resin molded body comprises a laminate comprising five or more laminated first layers comprising a thermoplastic resin, and at least one of the plurality of the above first layers comprises a filler, and therefore, the tensile strength can be increased.

In another particular aspect of the multilayered resin molded body of the present invention, a material of the above filler is carbon nanotubes.

A method for manufacturing a multilayered resin molded body according to the present invention comprises the steps of preparing a resin composite composition comprising the thermoplastic resin and the filler, the filler being dispersed in the thermoplastic resin; coextruding the resin composite composition to form a laminate of the resin composition layers; and dividing the laminate and further laminating the divided laminates. Various multilayered resin molded bodies of the present invention can be manufactured by the above manufacturing method.

Also disclosed is a method for manufacturing a multilayered resin molded body according to the present invention, the method for manufacturing a multilayered resin molded body comprising the steps of preparing a resin composition comprising the thermoplastic resin and the filler, the filler being dispersed in the thermoplastic resin; molding the resin composition to fabricate a plurality of resin composition layers; and stacking the plurality of resin composition layers to mold a multilayered resin molded body. Various multilayered resin molded bodies of the present invention can be manufactured by the above manufacturing method.

Also disclosed is a method for manufacturing a multilayered resin molded body according to the present invention, the method for manufacturing a multilayered resin molded body comprising the steps of preparing a resin composite composition comprising the first thermoplastic resin and the filler, the filler being dispersed in the first thermoplastic resin; coextruding the resin composite composition and the second thermoplastic resin to form a laminate of a first layer and a second layer; and dividing the above laminate and further laminating the above divided laminates. Various multilayered resin molded bodies of the present invention can be manufactured by the above manufacturing method. Also disclosed is a method for manufacturing a multilayered resin molded body according to the present invention, the method for manufacturing a multilayered resin molded body comprising the step of molding by a multilayer melt extrusion method a laminate comprising five or more laminated first layers comprising a thermoplastic resin, at least one of the plurality of the above first layers comprising a filler.

### Advantageous Effects of Invention

In the multilayered resin molded body of the present invention, the angle formed by the longitudinal direction of each filler comprising a carbon material having a graphene structure and a direction that is the average of the longitudinal directions of all of the above fillers is 6° or less, and therefore, the orientability of the above filler is high. Therefore, the mechanical strength of the multilayered resin molded body can be effectively increased.

In addition, in the method for manufacturing a multilayered resin molded body according to the present invention, multilayer molding is performed by forming a laminate by coextrusion, and then dividing the laminate and further laminating the divided laminates, and therefore, the orientability of the above filler can be increased. Therefore, a multilayered resin molded body having high mechanical strength can be manufactured.

### Brief Description of Drawings

[Figure 1] Figure 1 is a schematic cross-sectional view of a multilayered resin molded body in one embodiment of the present invention.
[Figure 2] Figure 2 is a schematic cross-sectional view of a multilayered resin molded body in another embodiment of the present invention.
[Figure 3] Figure 3 is a schematic view for explaining steps for obtaining a multilayered molded body in the manufacture of a multilayered resin molded body of the present invention.
[Figure 4] Figure 4 is a schematic perspective view showing a flow-dividing adapter used for laminating a plurality of layers when forming a multilayered resin molded body according to the present invention.
[Figure 5] Figure 5 is a schematic cross-sectional view showing one resin composition layer constituting a multilayered resin molded body in another embodiment of the present invention.
[Figure 6] Figure 6 is a cross-sectional photograph of a cut plane of the multilayered resin molded body of Example 22 taken by a 1000x TEM.
[Figure 7] Figure 7 is a cross-sectional photograph of a cut plane of the multilayered resin molded body of Comparative Example 22 taken by a 1000x TEM.
[Figure 8] Figure 8 is a schematic front view for explaining a flow-dividing adapter used for obtaining a multilayered structure in Example 33.
[Figure 9] Figure 9 is a schematic cross-sectional view of a multilayered resin formed body in another embodiment of the present invention.
[Figure 10] Figure 10 is a schematic cross-sectional view of a multilayered resin formed body in another embodiment of the present invention.
[Figure 11] Figure 11 is a schematic cross-sectional view of a multilayered resin formed body in another embodiment of the present invention.
[Figure 12] Figure 12 is a schematic cross-sectional view of a multilayered resin formed body in another embodiment of the present invention.

### Description of Embodiments

The present invention will be clarified below by describing specific embodiments of the present invention with reference to the drawings.

### (Multilayered Resin Molded Body 1)

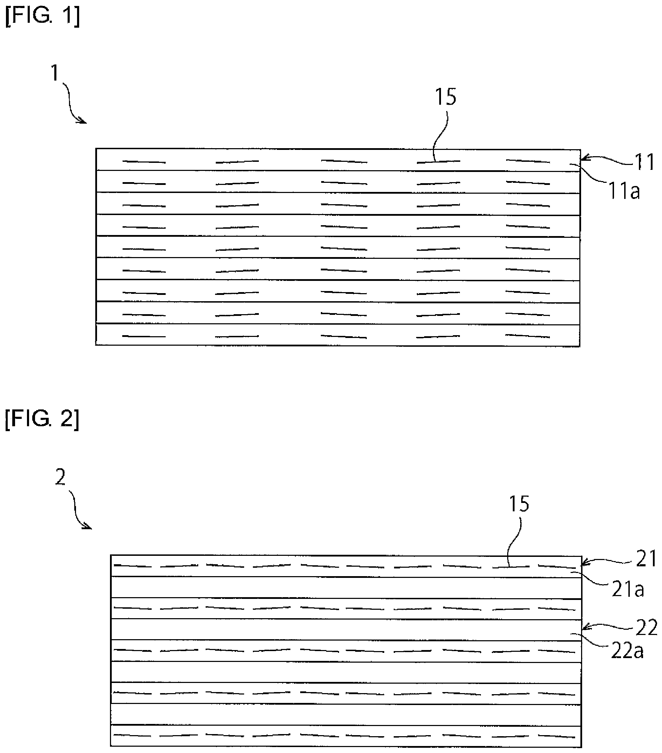

Figure 1 is a schematic cross-sectional view of a multilayered resin molded body of the present invention. In Figure 1, hatching which represents a cross section is omitted in order to clarify the presence of a filler 15.

As shown in Figure 1, in a multilayered resin molded body 1, a plurality of resin composition layers 11 are laminated. The shape of the multilayered resin molded body 1 is not particularly limited, and is preferably, for example, a sheet shape. In this case, the multilayered resin molded body 1 can be easily molded by laminating the plurality of resin composition layers 11 having a thin sheet shape.

The thickness of the multilayered resin molded body 1 is not particularly limited, and can be, for example, in the range of 0.01 to 1.0 µm. In addition, the number of laminated layers in the multilayered resin molded body 1 required to make the multilayered resin molded body 1 have the desired thickness may be determined from the thickness of the resin composition layer 11.

The number of resin composition layers 11 laminated in the multilayered resin molded body 1 is preferably 10 or more, more preferably 20 or more, and still more preferably 30 or more. By increasing the number of the resin composition layers 11 laminated, the mechanical strength of the multilayered resin molded body 1 can be still further increased. Also in a case where the thickness of the multilayered resin molded body 1 is the same, as the number of the resin composition layers 11 laminated increases, the mechanical strength of the multilayered resin molded body 1 increases.

A thermoplastic resin 11a is contained in the resin composition layer 11, and the filler 15 is dispersed in the thermoplastic resin 11a. With the multilayered resin molded body 1 using the thermoplastic resin 11a, various molded articles can be easily obtained by heating, using various molding methods.

The thermoplastic resin 11a is not particularly limited, and various thermoplastic resins, such as polyolefins, polyamides, polyesters, polystyrene, polyvinyl chloride, polyvinyl acetate, and ABS resins, can be used. Preferably, as the thermoplastic resin 11a, at least one selected from the group consisting of polyolefin-based resins, such as polypropylene, polyethylene, random copolymers of ethylene and propylene, block copolymers of ethylene and propylene, and copolymers of ethylene and α-olefins, polyamides, and ABS resins is used. Still more preferably, as the thermoplastic resin 11a, polypropylene-based resins, that is, homopolymers of propylene, copolymers of propylene and ethylene, and the like, are used. The above polypropylene-based resins are widely used in various resin molded bodies and are inexpensive. In addition, the above polypropylene-based resins can be easily molded at relatively low temperature. Therefore, by using the polypropylene-based resins, the cost of the multilayered resin molded body 1 can be reduced, and the multilayered resin molded body 1 can be more easily manufactured.

In the resin composition layer 11, the filler 15 comprising a carbon material having a graphene structure is dispersed in the above thermoplastic resin 11a. As the above carbon material, preferably, at least one selected from the group consisting of graphite, exfoliated graphite, graphite, carbon fibers, and carbon nanotubes can be used. More preferably, as the above carbon material, at least one selected from the group consisting of a laminate of a plurality of graphene sheets, that is, exfoliated graphite, carbon fibers, and carbon nanotubes is used. In the present invention, graphite refers to a laminate in which a large number of graphene sheets are laminated. Exfoliated graphite is obtained by subjecting graphite to exfoliation treatment, and refers to a graphene sheet laminate thinner than graphite. The number of graphene sheets laminated in exfoliated graphite should be smaller than that in graphite, and is generally about several to 200, preferably about several to 10. In the above exfoliated graphite, thin graphene sheets are laminated, and the above exfoliated graphite has a shape having a relatively high aspect ratio. Therefore, when the filler 15 comprising the above exfoliated graphite is uniformly dispersed in the thermoplastic resin 11a contained in the resin composition layer 11 in the multilayered resin molded body of the present invention, the reinforcing effect of the above exfoliated graphite against an external force applied in a direction crossing the lamination planes can be effectively increased.

Preferred lower and upper limits of the aspect ratio of the above carbon material are 10 and 500, respectively. The aspect ratio refers to the ratio of the maximum dimension of the above carbon material in the graphene sheet lamination plane direction to the thickness of the above carbon material. If the aspect ratio of the above carbon material is too low, the above reinforcing effect against an external force applied in a direction crossing the lamination planes may not be sufficient. On the other hand, even if the aspect ratio of the above carbon material is too high, the effect is saturated, and a further reinforcing effect cannot be expected in some cases. More preferably, the lower and upper limits of the aspect ratio of the above carbon material are 90 and 500, respectively.

In the resin composition layer 11, all fillers 15 in the thermoplastic resin 11a are oriented in a fixed direction, and the angle formed by the longitudinal direction of each filler 15 and a direction that is the average of the longitudinal directions of all fillers 15 is 6° or less. In other words, variations in the orientation angles of the fillers 15 are small. Thus, the orientability of the entire filler 15 is high. Therefore, the mechanical strength of the resin composition layer 11 is effectively increased. Therefore, the mechanical strength, such as tensile modulus, of the multilayered resin molded body 1 in which the resin composition layers 11 are laminated is increased.

In this embodiment, the entire filler 15 is oriented in a direction parallel to the layer planes of the resin composition layers 11, but the orientation direction of the filler comprising the above carbon material contained in the multilayered resin molded body of the present invention is not limited to the above direction. In other words, the above filler contained in the multilayered resin molded body of the present invention may be oriented in any direction as long as the entire above filler has high orientability, that is, as long as the angle formed by the longitudinal direction of each of the above fillers and a direction that is the average of the longitudinal directions of all of the above fillers is 6° or less. However, the above filler is preferably oriented in a direction parallel to the layer planes of the resin composition layers of the above multilayered resin molded body. In this case, the mechanical strength of the above resin composition layers and the above multilayered resin molded body is further increased.

The method for obtaining the above angle is not particularly limited. The above angle can be obtained by fabricating a thin film section in the central portion in the thickness direction in the resin composition layers, in a direction in which the above fillers are most oriented, generally a direction parallel to the resin flow direction during molding, observing the fillers at a magnification of 500x to 10000x by a scanning electron microscope (SEM) using the thin film section, and measuring an angle formed by a direction that is the average of the longitudinal directions of the observed fillers.

The thickness of the resin composition layer 11 is not particularly limited, and is preferably decreased to 1 to 3 times the thickness of the filler 15. Thus, the filler 15 sandwiched between the upper and lower layer planes of the resin composition layer 11 in the resin composition layer 11 is oriented in a direction parallel to the layer planes of the resin composition layer 11. Therefore, the mechanical strength, such as tensile modulus, of the resin composition layer 11 and the multilayered resin molded body 1 can be further increased. More preferably, the thickness of the plurality of resin composition layers 11 may be 1 to 2 times the thickness of the filler 15.

The amount of the filler 15 contained in the thermoplastic resin contained in the resin composition layer 11 is preferably set in the range of 1 to 50 parts by weight based on 100 parts by weight of the thermoplastic resin 11a. By setting the amount of the filler 15 contained in the thermoplastic resin 11a in the above range, the multilayered resin molded body 1 having increased mechanical strength such as tensile modulus can be obtained. If the amount of the filler 15 contained in the thermoplastic resin 11a is less than 1 part by weight, the mechanical strength of the multilayered resin molded body 1 may not be sufficiently increased. If the amount of the filler 15 contained in the thermoplastic resin 11a is more than 50 parts by weight, the rigidity of the multilayered resin molded body 1 increases, and the multilayered resin molded body 1 may become brittle.

### (Multilayered Resin Molded Body 2)

Figure 2 is a schematic cross-sectional view showing a multilayered resin molded body 2 according to a modification of the multilayered resin molded body 1 in the embodiment of the present invention. Also in Figure 2, hatching which represents a cross section is omitted in order to clarify the presence of a filler 15.

As shown in Figure 2, in a multilayered resin molded body 2, a plurality of first resin composition layers 21 and a plurality of second resin composition layers 22 are laminated. The first resin composition layer 21 corresponds to the resin composition layer 11 of the above multilayered resin molded body 1. In other words, a thermoplastic resin 21a is contained in the first resin composition layer 21, and the filler 15 is dispersed in the thermoplastic resin 21a. The second resin composition layer 22 comprises a thermoplastic resin 22a in this modification, but may comprise the thermoplastic resin 22a as a main component. Comprising as a main component refers to half or more of the weight of the second resin composition layer 22 being composed of the weight of the thermoplastic resin 22a contained in the second resin composition layer 22.

In the multilayered resin molded body of the present invention, the second resin composition layers 22 may be laminated with the first resin composition layers 21, as in the multilayered resin molded body 2 in this modification. Also in this case, in the multilayered resin molded body of the present invention, the orientability of the filler 15 in the first resin composition layers 21 is increased, and therefore, the mechanical strength of the multilayered resin molded body can be effectively increased.

As the thermoplastic resins 21a and 22a, thermoplastic resins similar to those mentioned for the thermoplastic resin 11a of the above multilayered resin molded body 1 can be used. In addition, the thermoplastic resins 21a and 22a may be the same or different. When the thermoplastic resins 21a and 22a are the same, the adhesiveness between the first resin composition layers 21 and the second resin composition layers 22 can be increased. In addition, when the thermoplastic resins 21a and 22a are different, for example, functionality other than mechanical strength can be provided to the multilayered resin molded body 1 by separating the functions of the first resin composition layer 21 comprising the thermoplastic resin 21a and the second resin composition layer 22 comprising the thermoplastic resin 22a. For example, the multilayered resin molded body 2 having high gas barrier properties can be obtained by using polyethylene oxide having high gas barrier properties as the thermoplastic resin 22a. In addition, the multilayered resin molded body 2 having high impact resistance can be obtained by using ABS having high impact resistance as the thermoplastic resin 22a.

The second resin composition layer 22 does not comprise a filler comprising a carbon material having a graphene structure in this modification, but the second resin composition layer 22 may comprise a filler comprising a carbon material having a graphene structure. However, as the amount of the filler comprising a carbon material having a graphene structure contained in the second resin composition layer 22 decreases, the amount of the filler comprising a carbon material having a graphene structure used can be efficiently decreased without decreasing the mechanical strength of the multilayered resin molded body 2 much.

The thickness of the second resin composition layer 22 can be substantially equal to the thickness of the first resin composition layer 21. The total number of layers in the multilayered resin molded body required to make the multilayered resin molded body 2 have the desired thickness may be determined from the thicknesses of the first resin composition layer 21 and the second resin composition layer 22.

### (Method for Manufacturing Multilayered Resin Molded Bodies 1 and 2)

Next, one embodiment of a method for manufacturing the multilayered resin molded body 1 according to the present invention will be described.

First, the filler 15 comprising a carbon material having a graphene structure is uniformly dispersed in the thermoplastic resin 11a to obtain a resin composition in which the filler 15 is uniformly dispersed in the thermoplastic resin 11a. In the above dispersion method, for example, the above resin composition in which the filler 15 is uniformly dispersed in the thermoplastic resin 11a can be obtained by kneading the thermoplastic resin 11a and the filler 15 under heating using a twin screw kneader, such as a plastomill, a twin screw extruder, or the like.

When a resin composition in which the filler 15 comprising exfoliated graphite is uniformly dispersed in the thermoplastic resin 11a is obtained, the above resin composition can also be obtained by a method of kneading expanded graphite with the thermoplastic resin 11a under heating. In expanded graphite, the interlayer distance of the graphite is increased. By melting and kneading the expanded graphite and a thermoplastic resin under heating, the expanded graphite separates into a plurality of exfoliated graphites, and the above exfoliated graphites are uniformly dispersed in the melted and kneaded material. The above expanded graphite can be obtained by increasing the interlayer distance of graphite by an electrochemical method in which electrolyte ions, such as nitrate ions, are inserted between the layers of graphite.

Next, the above resin composition is coextruded to obtain a laminate of two or more layers in which the resin composition layers 11 comprising the above thermoplastic composition are laminated. The method for obtaining the above laminate is not particularly limited, and examples thereof include a wet lamination method, a dry lamination method, a melting and hot pressing lamination method, an extrusion coating method, a multilayer melt extrusion method, a hot melt lamination method, and a heat lamination method.

Preferably, as the above manufacturing method, a multilayer melt extrusion method in which the manufacture of the multilayered resin molded body 1 of the present invention is easy can be used. Examples of the above multilayer melt extrusion method include a multi-manifold method and a feed block method. Specifically, the above resin composition is introduced into both of a first extruder and a second extruder, and the above resin composition is simultaneously extruded from the above first extruder and the above second extruder. The above resin composition extruded from the above first extruder and the above resin composition extruded from the above second extruder are fed to a feed block. In the above feed block, the above resin composition extruded from the above first extruder and the above resin composition extruded from the above second extruder join. Thus, a laminate in which the resin composition layers 11 comprising the above resin composition are laminated can be obtained.

Next, the above laminate is transferred to a multilayer formation block, and multilayered in the above multilayer formation block, and the multilayered resin molded body 1 in which the number of layers is 10 or more can be obtained.

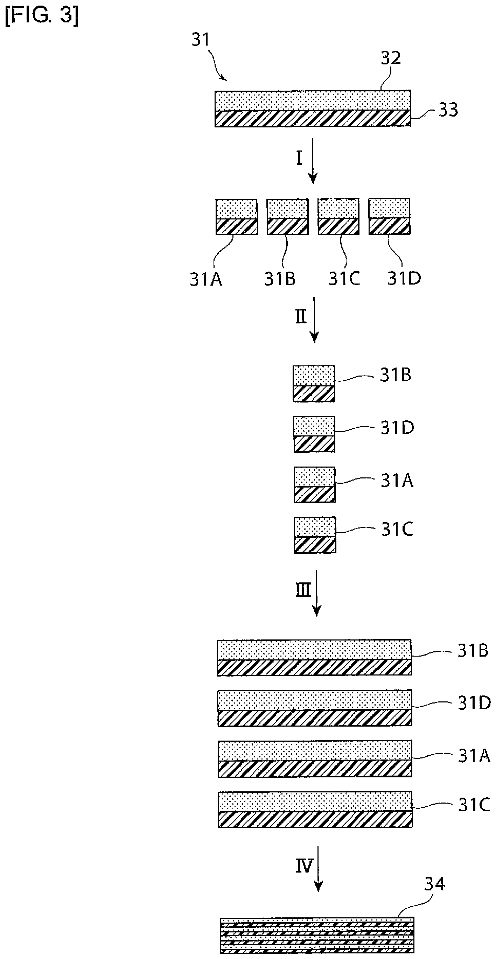

One example of a method for obtaining the above multilayered resin molded body comprising a laminate of 10 or more layers will be described with reference to Figure 3. As shown in Figure 3, a laminate 31 obtained by laminating a first layer 32 and a second layer 33 is extruded from an extruder. The laminate 31 is divided into a plurality of laminates in the extrusion direction in step I. In other words, the laminate 31 is divided along a plurality of planes that are in directions parallel to the extrusion direction of the laminate 31 and are perpendicular to the lamination plane. In this manner, divided laminates 31A, 31B, 31C, and 31D are obtained.

Next, in step II, the laminates 31A to 31D obtained by division are moved using a flow-dividing adapter or the like so as to line up in the lamination direction. Here, the laminate 31B, the laminate 31D, the laminate 31A, and the laminate 31C are disposed in this order from the top.

Then, in step III, the laminate 31B, the laminate 31D, the laminate 31A, and the laminate 31C are extended in directions parallel to the lamination planes. Next, in step IV, the extended laminates 31A to 31D are stacked, and then compressed in a direction perpendicular to the lamination planes. In this manner, a laminate 34 of eight layers can be obtained. By repeating these steps I to IV, a multilayered molded body in which the number of layers is 10 or more can be obtained.

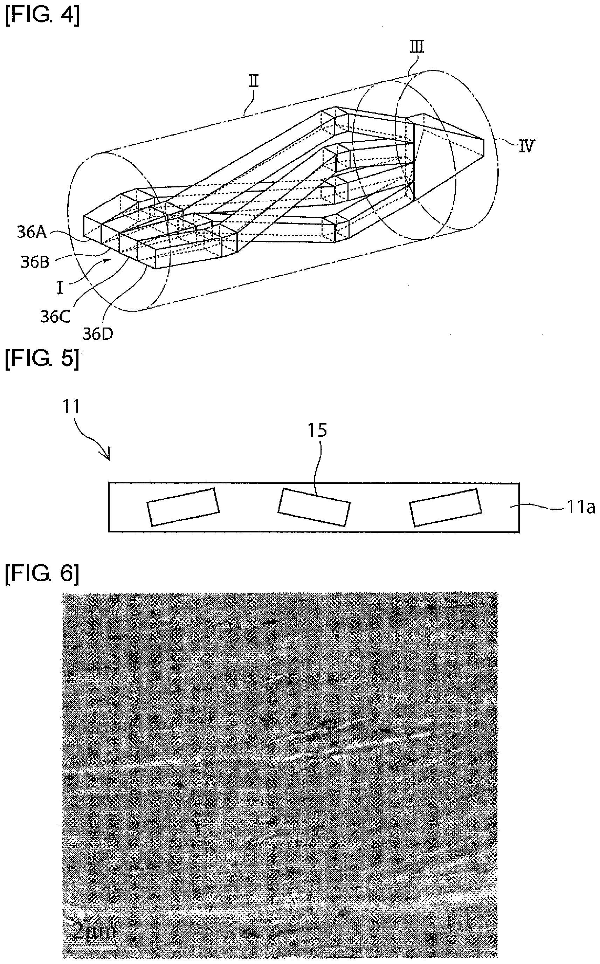

One example of the above flow-dividing adapter is shown in Figure 4. In the flow-dividing adapter shown in Figure 4, laminates 36A to 36D are laminated according to the above-described steps I to IV shown in Figure 3. A multilayered molded body can be obtained using a plurality of the flow-dividing adapters.

The above multilayer molding is not limited to the method in this embodiment as described above, and can be performed by appropriate multilayering methods and apparatuses. For example, the multilayered resin molded body 1 in which the number of layers is 10 or more may be obtained by repeatedly folding back the above laminate for multilayering.

In the above multilayer molding, the resin composition layer 11 is preferably thinly formed to the extent that the thickness of the resin composition layer 11 is 1 to 3 times the thickness of the filler 15. Thus, the filler 15 is oriented in a direction parallel to the layer planes of the resin composition layer 11. Thus, the mechanical strength, such as tensile modulus, of the obtained multilayered resin molded body 1 can be further increased. In addition, by laminating a large number of the resin composition layers 11 thinly formed as described above, the multilayered resin molded body 1 having high mechanical strength and being thick can be obtained.

The multilayered resin molded body 2 in the above modification of the present invention can be manufactured by the above manufacturing method using the second thermoplastic resin 22a together with the above resin composition. Specifically, by introducing the above resin composition and the second thermoplastic resin 22a into the above first extruder and the above second extruder, respectively, and allowing the above resin composition and the second thermoplastic resin 22a to join in the above feed block, a laminate in which the first resin composition layer 21 comprising the above resin composition and the second resin composition layer 22 comprising the thermoplastic resin 22a are laminated can be obtained. Then, by multilayer-molding the above laminate, the multilayered resin molded body 2 can be obtained.

### (Multilayered Resin Molded Bodies 3 and 4)

Next, a multilayered resin molded body 3 according to a modification of the multilayered resin molded body 1 in the embodiment of the present invention will be described with reference to Figure 1. In the multilayered resin molded body 3, a plurality of resin composition layers 11 are laminated. The shape of the multilayered resin molded body 3 is not particularly limited, and is preferably, for example, a sheet shape. In this case, the multilayered resin molded body 3 can be easily molded by laminating the plurality of resin composition layers 11 having a thin sheet shape.

The thickness of the multilayered resin molded body 3 is not particularly limited, and is preferably in the range of 0.1 to 2.0 mm, more preferably in the range of 0.1 to 1.0 mm. In addition, the number of the resin composition layers 11 laminated that is required to make the multilayered resin molded body 3 have the desired thickness may be determined from the thickness of the resin composition layer 11.

The number of the resin composition layers 11 laminated in the multilayered resin molded body 3 is preferably 10 or more, more preferably 20 or more, and still more preferably 30 or more. By increasing the number of the resin composition layers 11 laminated, the mechanical strength of the multilayered resin molded body 3 can be still further increased. Also in a case where the thickness of the multilayered resin molded body 3 is the same, as the number of the resin composition layers 11 laminated increases, the mechanical strength of the multilayered resin molded body 3 increases.

A thermoplastic resin 11a is contained in the resin composition layer 11, and a filler 15 is dispersed in the thermoplastic resin 11a. With the multilayered resin molded body 3 using the thermoplastic resin 11a, various molded articles can be easily obtained by heating, using various molding methods.

The thermoplastic resin 11a is not particularly limited, and various thermoplastic resins, such as polyolefins, polyamides, polyesters, polystyrene, polyvinyl chloride, and polyvinyl acetate, can be used. Preferably, as the thermoplastic resin 11a, at least one selected from the group consisting of polyolefin-based resins, such as polypropylene, polyethylene, random copolymers of ethylene and propylene, block copolymers of ethylene and propylene, and copolymers of ethylene and α-olefins, polyamides, and ABS resins is used. Still more preferably, as the thermoplastic resin 11a, polypropylene-based resins, that is, homopolymers of propylene, copolymers of propylene and ethylene, and the like, are used. The above polypropylene-based resins are widely used in various resin molded bodies and are inexpensive. In addition, the above polypropylene-based resins can be easily molded at relatively low temperature. Therefore, by using the polypropylene-based resins, the cost of the multilayered resin molded body 3 can be reduced, and the multilayered resin molded body 3 can be more easily manufactured.

The molecular weight of the thermoplastic resin 11a is not particularly limited, and preferably, the weight average molecular weight of the thermoplastic resin is in the range of 6.00 × 10⁵ to 1.50 × 10⁵. If the above weight average molecular weight is smaller than 1.50 × 10⁵, the strength of the resin composition layers 11 decreases, and the interfaces between the resin composition layers 11 may rupture. Thus, disorder occurs in the lamination planes of the multilayered resin molded body 3, and the mechanical strength of the multilayered resin molded body 3 may decrease. If the above molecular weight is larger than 6.00 × 10⁵, there is no particular problem, but the viscosity increases, and therefore, the handling during molding may be difficult.

In the resin composition layer 11, the filler 15 comprising a carbon material having a graphene structure is dispersed in the above thermoplastic resin 11a. As the above carbon material, preferably, at least one selected from the group consisting of graphite, exfoliated graphite, graphite, carbon nanofibers, and carbon nanotubes can be used. More preferably, as the above carbon material, at least one selected from the group consisting of a laminate of a plurality of graphene sheets, that is, exfoliated graphite, carbon nanofibers, and carbon nanotubes is used.

Graphite refers to a laminate in which a large number of graphene sheets are laminated. Exfoliated graphite is obtained by subjecting graphite to exfoliation treatment, and refers to a graphene sheet laminate thinner than graphite. The number of graphene sheets laminated in exfoliated graphite should be smaller than that in graphite, and is generally about several to 200, preferably about several to 10.

In the above exfoliated graphite, thin graphene sheets are laminated, and the above exfoliated graphite has a shape having a relatively high aspect ratio. Therefore, when the filler 15 comprising the above exfoliated graphite is uniformly dispersed in the thermoplastic resin 11a contained in the resin composition layer 11 in the multilayered resin molded body of the present invention, the reinforcing effect of the above exfoliated graphite against an external force applied in a direction crossing the lamination planes can be effectively increased.

Preferred lower and upper limits of the aspect ratio of the above filler 15 are 10 and 1000, respectively. The aspect ratio refers to the ratio of the maximum dimension of the above carbon material in the graphene sheet lamination plane direction to the thickness of the above carbon material. If the aspect ratio of the above carbon material is too low, the above reinforcing effect against an external force applied in a direction crossing the lamination planes may not be sufficient. On the other hand, even if the aspect ratio of the above carbon material is too high, the effect is saturated, and a further reinforcing effect cannot be expected in some cases. More preferably, the lower and upper limits of the aspect ratio of the above carbon material are 10 and 300, respectively.

The thickness of the filler 15 is not particularly limited, and is preferably in the range of 10 to 650 nm, more preferably in the range of 10 to 500 nm. By setting the thickness of the filler 15 in the above range, the reinforcing effect of the filler 15 can be effectively increased. Thus, the mechanical strength of the multilayered resin molded body 3 can be still further increased.

In the multilayered resin molded body 3 of the present invention, the angle formed by the longitudinal direction of each of the above fillers and a direction that is the average of the longitudinal directions of all of the above fillers is 6° or less, as in the multilayered resin molded body 1. Further, in the multilayered resin molded body 3 of the present invention, the thickness per layer of the resin composition layers 11, t, is in the range of α < t ≤ 15α when the thickness of the filler 15 is α. More preferably, the thickness per layer of the plurality of resin composition layers 11, t, can be set in the range of α < t ≤ 5α of the thickness of the filler 15. By setting the thickness per layer of the resin composition layers 11 in the above range, the filler 15 can be present in the resin composition layers 11 without disordering the interfaces between the resin composition layers 11. Therefore, the multilayered resin molded body 3 in which the plurality of resin composition layers 11 are laminated without disorder can be provided. Therefore, according to the present invention, the multilayered resin molded body 3 having high mechanical strength can be provided.

The relationship between the thickness per layer of the resin composition layers 11 and the thickness of the filler 15 will be described with reference to Figure 5. Figure 5 is a schematic view showing one of the resin composition layers 11 constituting the multilayered resin molded body 3. As shown in Figure 5, each filler 15 contained in the resin composition layer 11 is not necessarily oriented in a direction parallel to the layer planes of the resin composition layer 11, and is slightly inclined with respect to a direction parallel to the layer planes of the resin composition layer 11. In the multilayered resin molded body 3 of the present invention, the thickness of the resin composition layer 11, t, is in the range of a < t ≤ 15α when the thickness of the filler is α. Therefore, even if the filler 15 is slightly inclined in the resin composition layers 11, the filler 15 is in the range of the thickness of the resin composition layer 11, and therefore is less likely to protrude from the interfaces between the resin composition layers 11. Therefore, the filler 15 is less likely to cause disorder at the interfaces between the resin composition layers 11, and therefore, the multilayered resin molded body 3 in which the plurality of resin composition layers 11 are laminated without disorder can be provided.

If the thickness per layer of the resin composition layers 11 is equal to or smaller than 1 time the thickness of the filler 15, the ends of the filler 15 may protrude from the interfaces between the resin composition layers 11 and be exposed when the inclination of the filler 15 with respect to the above direction is large. In this case, the interfaces between the resin composition layers 11 are disordered. Therefore, disorder occurs in the lamination planes of the multilayered resin molded body 3, and thus, the mechanical strength of the multilayered resin molded body 3 decreases.

If the thickness per layer of the resin composition layers 11, t, is larger than 15 times the thickness of the filler 15, α, the filler 15 cannot be oriented in a direction parallel to the layer planes of the resin composition layers 11, and the mechanical strength cannot be increased.

A specific thickness per layer of the resin composition layers 11 should be appropriately determined by the thickness of the filler 15, and is preferably in the range of 0.01 µm to 2.0 µm. By laminating the plurality of resin composition layers 11 in which the filler 15 is dispersed in a thickness in the above range, the mechanical strength of the multilayered resin molded body 3 can be effectively increased. If the thickness per layer of the resin composition layers 11 is less than 0.01 µm, disorder may occur in the lamination planes of the multilayered resin molded body 3, and the mechanical strength of the multilayered resin molded body 3 may decrease. If the thickness per layer of the resin composition layers 11 is more than 2.0 µm, the filler 15 cannot be oriented in a direction parallel to the layer planes of the resin composition layers 11, and the mechanical strength cannot be increased.

The amount of the filler 15 contained in the thermoplastic resin 11a contained in the resin composition layer 11 is preferably set in the range of 1 to 50 parts by weight based on 100 parts by weight of the thermoplastic resin 11a. By setting the amount of the filler 15 contained in the thermoplastic resin 11a in the above range, the multilayered resin molded body 3 having increased mechanical strength such as tensile modulus can be obtained. If the amount of the filler 15 contained in the thermoplastic resin 11a is less than 1 part by weight, the mechanical strength of the multilayered resin molded body 3 may not be sufficiently increased. If the amount of the filler 15 contained in the thermoplastic resin 11a is more than 50 parts by weight, the rigidity of the multilayered resin molded body 3 increases, but the multilayered resin molded body 3 may become brittle.

More preferably, the amount of the filler 15 contained in the thermoplastic resin 11a contained in the resin composition layer 11 is in the range of 1 to 30 parts by weight based on 100 parts by weight of the thermoplastic resin 11a. In this case, the multilayered resin molded body 3 in which the plurality of resin composition layers 11 are laminated reliably without disorder can be provided. Therefore, according to the present invention, the multilayered resin molded body 3 having reliably increased mechanical strength can be provided.

### (Multilayered Resin Molded Body 4)

Next, a multilayered resin molded body 4 according to a modification of the multilayered resin molded body 1 in the embodiment of the present invention will be described with reference to Figure 2.

As shown in Figure 2, in a multilayered resin molded body 4, a plurality of first resin composition layers 21 and a plurality of second resin composition layers 22 are laminated. The first resin composition layer 21 corresponds to the resin composition layer 11 of the above multilayered resin molded body 3. In other words, a first thermoplastic resin 21a is contained in the first resin composition layer 21, and a filler 15 is dispersed in the thermoplastic resin 21a. The second resin composition layer 22 comprises a second thermoplastic resin 22a in this modification, but may comprise the thermoplastic resin 22a as a main component. Comprising as a main component refers to half or more of the weight of the second resin composition layer 22 being composed of the weight of the thermoplastic resin 22a contained in the second resin composition layer 22.

In the multilayered resin molded body of the present invention, the second resin composition layers 22 may be laminated with the first resin composition layers 21, as in the multilayered resin molded body 4 in this modification. Also in this case, in the multilayered resin molded body of the present invention, the orientability of the filler 15 in the first resin composition layers 21 is increased, and therefore, the mechanical strength of the multilayered resin molded body can be effectively increased.

In this modification, the plurality of first resin composition layers 21 and the plurality of second resin composition layers 22 are alternately laminated. In this case, the plurality of first resin composition layers 21 can efficiently increase the mechanical strength of the entire multilayered resin molded body 4. However, the lamination state of the multilayered resin molded body 4 is not particularly limited, and, for example, the multilayered resin molded body 4 may comprise a portion in which a plurality of the first resin composition layers 21 or a plurality of the second resin composition layers 22 are continuously laminated.

As the thermoplastic resins 21a and 22a, thermoplastic resins similar to those mentioned for the thermoplastic resin 11a of the above multilayered resin molded body 3 can be used. In addition, the thermoplastic resins 21a and 22a may be the same or different. When the thermoplastic resins 21a and 22a are the same, the adhesiveness between the first resin composition layers 21 and the second resin composition layers 22 can be increased. In addition, when the thermoplastic resins 21a and 22a are different, for example, functionality other than mechanical strength can be provided to the multilayered resin molded body 2 by separating the functions of the first resin composition layer 21 comprising the thermoplastic resin 21a and the second resin composition layer 22 comprising the thermoplastic resin 22a. For example, the multilayered resin molded body 4 having high gas barrier properties can be obtained by using polyethylene oxide having high gas barrier properties as the thermoplastic resin 22a. In addition, the multilayered resin molded body 4 having high impact resistance can be obtained by using ABS having high impact resistance as the thermoplastic resin 22a.

The second resin composition layer 22 does not comprise a filler comprising a carbon material having a graphene structure in this modification, but the second resin composition layer 22 may comprise a filler comprising a carbon material having a graphene structure. However, as the amount of the filler comprising a carbon material having a graphene structure contained in the second resin composition layer 22 decreases, the amount of the filler comprising a carbon material having a graphene structure used can be efficiently decreased without decreasing the mechanical strength of the multilayered resin molded body 4 much.

The thickness of the second resin composition layer 22 is not particularly limited, and can be substantially equal to the thickness of the first resin composition layer 21. The total number of layers in the multilayered resin molded body required to make the multilayered resin molded body 4 have the desired thickness may be determined from the thicknesses of the first resin composition layer 21 and the second resin composition layer 22.

### (Method for Manufacturing Multilayered Resin Molded Bodies 3 and 4)

Next, one embodiment of a method for manufacturing the multilayered resin molded body 3 according to the present invention will be described.

First, the filler 15 comprising a carbon material having a graphene structure is uniformly dispersed in the thermoplastic resin 11a to obtain a resin composition in which the filler 15 is uniformly dispersed in the thermoplastic resin 11a. In the above dispersion method, for example, the above resin composition in which the filler 15 is uniformly dispersed in the thermoplastic resin 11a can be obtained by kneading the thermoplastic resin 11a and the filler 15 under heating using a twin screw kneader, such as a plastomill, a twin screw extruder, or the like.

When a resin composition in which the filler 15 comprising exfoliated graphite is uniformly dispersed in the thermoplastic resin 11a is obtained, the above resin composition can also be obtained by a method of kneading expanded graphite with the thermoplastic resin 11a under heating. In expanded graphite, the interlayer distance of the graphite is increased. By melting and kneading the expanded graphite and a thermoplastic resin under heating, the expanded graphite separates into a plurality of exfoliated graphites, and the above exfoliated graphites are uniformly dispersed in the melted and kneaded material. The above expanded graphite can be obtained by increasing the interlayer distance of graphite by an electrochemical method in which electrolyte ions, such as nitrate ions, are inserted between the layers of graphite.

Next, the above resin composition is molded to fabricate the plurality of resin composition layers 11. The method for fabricating the resin composition layers 11 is not particularly limited, and the resin composition layers 11 can be fabricated by molding methods used in conventionally known multilayer molding methods. Examples of the method for fabricating the above resin composition layers 11 include a method of sheeting the above resin composition under heating by press molding. In the step of sheeting by press molding, for example, sheeting can be performed by using a 0.5 mm thick spacer, performing remaining heat at 190°C for 2 minutes, and then applying a pressure of 100 kPa for 3 minutes.

Next, the above plurality of resin composition layers 11 are stacked to mold the multilayered resin molded body 3 in which the resin composition layers 11 are laminated. At this time, the multilayered resin molded body 3 is molded so that the thickness per layer of the above plurality of resin composition layers 11, t, is α < t ≤ 15α. The method for stacking the above plurality of resin composition layers 11 is not particularly limited as long as the thickness per layer of the above plurality of resin composition layers 11, t, is α < t ≤ 15α. Examples of the method include a method using repeated hot press molding similar to the above description.

In addition, as the method for forming the multilayered resin molded body 3 from the above resin composition, the fabrication and stacking of the plurality of resin composition layers 11 may be performed by a method of coextruding the above resin composition. The above coextrusion method is not particularly limited, and examples thereof include a wet lamination method, a dry lamination method, an extrusion coating method, a multilayer melt extrusion method, a hot melt lamination method, and a heat lamination method.

Preferably, as the above manufacturing method, a multilayer melt extrusion method in which the manufacture of the multilayered resin molded body 3 of the present invention is easy can be used. Examples of the above multilayer melt extrusion method include a multi-manifold method and a feed block method. Specifically, the above resin composition is introduced into both of a first extruder and a second extruder, and the above resin composition is simultaneously extruded from the above first extruder and the above second extruder. The above resin composition extruded from the above first extruder and the above resin composition extruded from the above second extruder are fed to a feed block. In the above feed block, the above resin composition extruded from the above first extruder and the above resin composition extruded from the above second extruder join. Thus, a laminate in which the resin composition layers 11 comprising the above resin composition are laminated can be obtained.

Next, the above laminate is transferred to a multilayer formation block, and multilayered in the above multilayer formation block, and the multilayered resin molded body 3 in which the number of layers is 10 or more can be obtained.

One example of a method for obtaining the above multilayered resin molded body comprising a laminate of 10 or more layers will be described with reference to Figure 3. As shown in Figure 3, a laminate 31 obtained by laminating a first layer 32 and a second layer 33 is extruded from an extruder. The laminate 31 is divided into a plurality of laminates in the extrusion direction in step I. In other words, the laminate 31 is divided along a plurality of planes that are in directions parallel to the extrusion direction of the laminate 31 and are perpendicular to the lamination plane. In this manner, divided laminates 31A, 31B, 31C, and 31D are obtained.

Next, in step II, the laminates 31A to 31D obtained by division are moved using a flow-dividing adapter or the like so as to line up in the lamination direction. Here, the laminate 31B, the laminate 31D, the laminate 31A, and the laminate 31C are disposed in this order from the top.

Then, in step III, the laminate 31B, the laminate 31D, the laminate 31A, and the laminate 31C are extended in directions parallel to the lamination planes. Next, in step IV, the extended laminates 31A to 31D are stacked, and then compressed in a direction perpendicular to the lamination planes. In this manner, a laminate 34 of eight layers can be obtained. By repeating these steps I to IV, a multilayered molded body in which the number of layers is 10 or more can be obtained.

One example of the above flow-dividing adapter is shown in Figure 4. In the flow-dividing adapter shown in Figure 4, laminates 36A to 36D are laminated according to the above-described steps I to IV shown in Figure 3. A multilayered molded body can be obtained using a plurality of the flow-dividing adapters.

The multilayered resin molded body 4 in the above modification of the present invention can be manufactured by using the second thermoplastic resin 22a together with the above resin composition. Specifically, the multilayered resin molded body 4 can be manufactured by press-molding each of the above resin composition and the second thermoplastic resin 22a, and then alternately stacking the obtained plurality of resin composition sheets and plurality of sheets of the thermoplastic resin 22a for molding. In addition, the multilayered resin molded body 4 can also be manufactured by coextruding the above resin composition and the second thermoplastic resin 22a from separate extruders.

### (Multilayered Resin Molded Body 5)

Next, a multilayered resin molded body 5 according to a modification of the multilayered resin molded body 1 in the embodiment of the present invention will be described with reference to Figure 2. As shown in Figure 2, in the multilayered resin molded body 5, a plurality of first resin composition layers 21 and a plurality of second resin composition layers 22 are laminated. In this embodiment, the plurality of first resin composition layers 21 and the plurality of second resin composition layers 22 are alternately laminated. However, the lamination state of the multilayered resin molded body 5 is not particularly limited, and, for example, the multilayered resin molded body 5 may comprise a portion in which a plurality of the first resin composition layers 21 or a plurality of the second resin composition layers 22 are continuously laminated.

The shape of the multilayered resin molded body 5 is not particularly limited, and is preferably, for example, a sheet shape. In this case, the multilayered resin molded body 5 can be easily molded by laminating the plurality of first resin composition layers 21 and second resin composition layers 22 having a thin sheet shape.

A thermoplastic resin 21a is contained in the first resin composition layer 21, and the filler 15 is dispersed in the thermoplastic resin 21a. The second resin composition layer 22 comprises a thermoplastic resin 22a in this embodiment, but may comprise the thermoplastic resin 22a as a main component. Comprising as a main component refers to half or more of the weight of the second resin composition layer 22 being composed of the weight of the thermoplastic resin 22a contained in the second resin composition layer 22. With the multilayered resin molded body 5 using the thermoplastic resins 21a and 22a, various molded articles can be easily obtained by heating, using various molding methods.

The thermoplastic resins 21a and 22a are not particularly limited, and examples thereof can include polyolefins, polyamides, polyesters, polystyrene, polyvinyl chloride, and polyvinyl acetate. Preferably, as the thermoplastic resins 21a and 22a, polyolefins, such as polypropylene, polyethylene, and ethylenepropylene copolymers, are used. By using polyolefins, the cost of the multilayered resin molded body 5 can be reduced, and the multilayered resin molded body 5 can be more easily manufactured.

In addition, the thermoplastic resins 21a and 22a may be the same or different. When the thermoplastic resins 21a and 22a are the same, the adhesiveness between the first resin composition layers 21 and the second resin composition layers 22 can be increased. In addition, when the thermoplastic resins 21a and 22a are different, for example, functionality other than mechanical strength can be provided to the multilayered resin molded body 5 by separating the functions of the first resin composition layer 21 comprising the thermoplastic resin 21a and the second resin composition layer 22 comprising the thermoplastic resin 22a. For example, the multilayered resin molded body 5 having high gas barrier properties can be obtained by using polyethylene oxide having high gas barrier properties as the thermoplastic resin 22a. In addition, the multilayered resin molded body 5 having high impact resistance can be obtained by using ABS having high impact resistance as the thermoplastic resin 22a. In addition, in the first resin composition layer 21, a carbon fiber woven fabric may be used as the filler 15. By inserting the carbon fiber woven fabric into the thermoplastic resin, the strength can be increased without impairing the toughness of the first resin composition layer 21. In addition, the carbon fiber woven fabric may be laminated on the first resin composition layer 21. Also in this case, the strength can be increased without impairing the toughness of the first resin composition layer 21.

In the first resin composition layer 21, the filler 15 comprising a carbon material having a graphene structure is dispersed in the above thermoplastic resin 21a. The second resin composition layer 22 comprises the thermoplastic resin 22a and does not comprise a filler comprising a carbon material having a graphene structure in this embodiment. However, in the multilayered resin molded body 5 of the present invention, the second resin composition layer 22 may comprise a filler comprising a carbon material having a graphene structure as long as the amount of the filler is smaller than the amount of the filler 15 contained in the first resin composition layer 21.

In the multilayered resin molded body 5 of the present invention, the angle formed by the longitudinal direction of each of the above fillers and a direction that is the average of the longitudinal directions of all of the above fillers is 6° or less, as in the multilayered resin molded body 1. Further, in the multilayered resin molded body 5 of the present invention, the amount of the filler 15 contained in the first resin composition layer 21 is larger than the amount of the filler comprising a carbon material having a graphene structure contained in the second resin composition layer 22 on a weight basis. In other words, in the multilayered resin molded body 5, the filler comprising a carbon material having a graphene structure is unevenly distributed in the plurality of first resin composition layers 21. In the plurality of first resin composition layers 21, a large amount of the filler 15 is uniformly dispersed in the thermoplastic resin 21a, and therefore, the mechanical strength of the plurality of first resin composition layers 21 increases. Thus, the mechanical strength of the entire multilayered resin molded body 5 in which the plurality of first resin composition layers 21 are laminated can be further increased. In other words, according to the present invention, the mechanical strength of the multilayered resin molded body 5 can be further increased with a small amount of the filler.

The amount of the filler 15 contained in the thermoplastic resin 21a contained in the first resin composition layer 21 is preferably set in the range of 1 to 50 parts by weight based on 100 parts by weight of the thermoplastic resin 21a. By setting the amount of the filler 15 contained in the thermoplastic resin 21a in the above range, the multilayered resin molded body 5 having increased mechanical strength such as tensile modulus can be obtained. If the amount of the filler 15 contained in the thermoplastic resin 21a is less than 1 part by weight, the mechanical strength of the multilayered resin molded body 5 may not be sufficiently increased. If the amount of the filler 15 contained in the thermoplastic resin 21a is more than 50 parts by weight, the rigidity of the multilayered resin molded body 5 increases, and the multilayered resin molded body 5 may become brittle.

The amount of the filler comprising a carbon material having a graphene structure contained in the second resin composition layer 22 is preferably less than 50 parts by weight based on 100 parts by weight of the thermoplastic resin 22a. More preferably, the filler comprising a carbon material having a graphene structure is not contained in the second resin composition layer 22. As the amount of the filler comprising a carbon material having a graphene structure contained in the second resin composition layer 22 decreases, the amount of the filler comprising a carbon material having a graphene structure used can be efficiently decreased without decreasing the mechanical strength of the multilayered resin molded body 5 much.

As described above, in this embodiment, the plurality of first resin composition layers 21 and the plurality of second resin composition layers 22 are alternately laminated. In this case, the plurality of first resin composition layers 21 can further increase the mechanical strength of the entire multilayered resin molded body 5.

As the above carbon material, preferably, at least one selected from the group consisting of graphene, carbon nanotubes, graphite, carbon fibers, and exfoliated graphite can be used. More preferably, as the above carbon material, a laminate of a plurality of graphene sheets, that is, exfoliated graphite, is used. Exfoliated graphite is obtained by subjecting original graphite to exfoliation treatment, and refers to a graphene sheet laminate thinner than the original graphite. The number of graphene sheets laminated in the exfoliated graphite should be smaller than that in the original graphite, and is generally about several to 200. In the above exfoliated graphite, thin graphene sheets are laminated, and the above exfoliated graphite has a shape having a relatively high aspect ratio. Therefore, when the filler 15 comprising the above exfoliated graphite is uniformly dispersed in the thermoplastic resin 21a contained in the first resin composition layer 21 in the multilayered resin molded body of the present invention, the reinforcing effect of the above exfoliated graphite against an external force applied in a direction crossing the lamination planes can be effectively increased.

The aspect ratio refers to the ratio of the maximum dimension of the exfoliated graphite in the lamination plane direction to the thickness of the exfoliated graphite. If the aspect ratio of the above exfoliated graphite is too low, the above reinforcing effect against an external force applied in a direction crossing the lamination planes may not be sufficient. On the other hand, even if the aspect ratio of the above exfoliated graphite is too high, the effect is saturated, and a further reinforcing effect cannot be expected in some cases. Therefore, preferred lower and upper limits of the aspect ratio are 70 and 500, respectively.

The thickness of the first resin composition layer 21 is not particularly limited, and is preferably 1 to 3 times the thickness of the filler 15. In this case, the filler 15 is oriented in a direction parallel to the planes of the first resin composition layer 21. Therefore, the tensile modulus of the first resin composition layer 21 and the multilayered resin molded body 5 can be further increased. More preferably, the thickness of the plurality of first resin composition layers 21 may be 1 to 2 times the thickness of the filler 15.

In addition, the thickness of the second resin composition layer 22 can be substantially equal to the thickness of the first resin composition layer 21.

The total number of layers in the multilayered resin molded body required to make the multilayered resin molded body 5 have the desired thickness may be determined from the thicknesses of the first resin composition layer 21 and the second resin composition layer 22.

### (Method for Manufacturing Multilayered Resin Molded Body 5)

Next, one embodiment of a method for manufacturing the multilayered resin molded body 5 (resin composite molded body) according to the present invention will be described.

First, the filler 15 is uniformly dispersed in the thermoplastic resin 21a to obtain a thermoplastic resin composition in which the filler 15 is uniformly dispersed in the thermoplastic resin 21a. In the above dispersion method, for example, the above thermoplastic resin composition in which the filler 15 is uniformly dispersed in the thermoplastic resin 21a can be obtained by kneading the thermoplastic resin 21a and the filler 15 under heating using a twin screw kneader, such as a plastomill, a twin screw extruder, or the like.

Next, a laminate of two layers to several layers in which the first resin composition layer(s) 21 comprising the above thermoplastic resin composition and the second resin composition layer(s) 22 comprising the thermoplastic resin 22a are laminated is obtained using the above thermoplastic resin composition and the thermoplastic resin 22a. The method for obtaining the above laminate is not particularly limited, and examples thereof include a method of laminating press-molded laminate sheets, and a method of laminating stretched sheets. Preferred examples include a wet lamination method, a dry lamination method, an extrusion coating method, a multilayer melt extrusion method, a hot melt lamination method, and a heat lamination method.

More preferably, as the above manufacturing method, a multilayer melt extrusion method in which the manufacture of the multilayered resin molded body of the present invention is easy can be used. Specifically, by coextruding the above thermoplastic resin composition and the thermoplastic resin 22a using two extruders, a laminate of two layers to several layers in which the first resin composition layer(s) 21 comprising the above thermoplastic resin composition and the second resin composition layer(s) 22 comprising the thermoplastic resin 22a are laminated can be obtained. Examples of the above multilayer melt extrusion method include a multi-manifold method and a feed block method.

Next, the above laminate is transferred to a multilayer formation block. In the above multilayer formation block, the above laminate is divided, and the above divided laminates are further laminated for multilayer molding, and the multilayered resin molded body 5 in which the number of layers is 10 or more can be obtained.

One example of a method for obtaining the above multilayered resin molded body comprising a laminate of 10 or more layers will be described with reference to Figure 3. As shown in Figure 3, a laminate 31 obtained by laminating a first layer 32 and a second layer 33 is extruded from an extruder. The laminate 31 is divided into a plurality of laminates in the extrusion direction in step I. In other words, the laminate 31 is divided along a plurality of planes that are in directions parallel to the extrusion direction of the laminate 31 and are perpendicular to the lamination plane. In this manner, divided laminates 31A, 31B, 31C, and 31D are obtained.

Next, in step II, the laminates 31A to 31D obtained by division are moved using a flow-dividing adapter or the like so as to line up in the lamination direction. Here, the laminate 31B, the laminate 31D, the laminate 31A, and the laminate 31C are disposed in this order from the top.

Then, in step III, the laminate 31B, the laminate 31D, the laminate 31A, and the laminate 31C are extended in directions parallel to the lamination planes. Next, in step IV, the extended laminates 31A to 31D are stacked, and then compressed in a direction perpendicular to the lamination planes. In this manner, a laminate 34 of eight layers can be obtained. By repeating these steps I to IV, a multilayered molded body in which the number of layers is 10 or more can be obtained.

The method for dividing and laminating the above laminate in the above multilayer molding is not particularly limited, and can be performed by appropriate methods and apparatuses.

### (Multilayered Resin Molded Bodies 6 to 9)

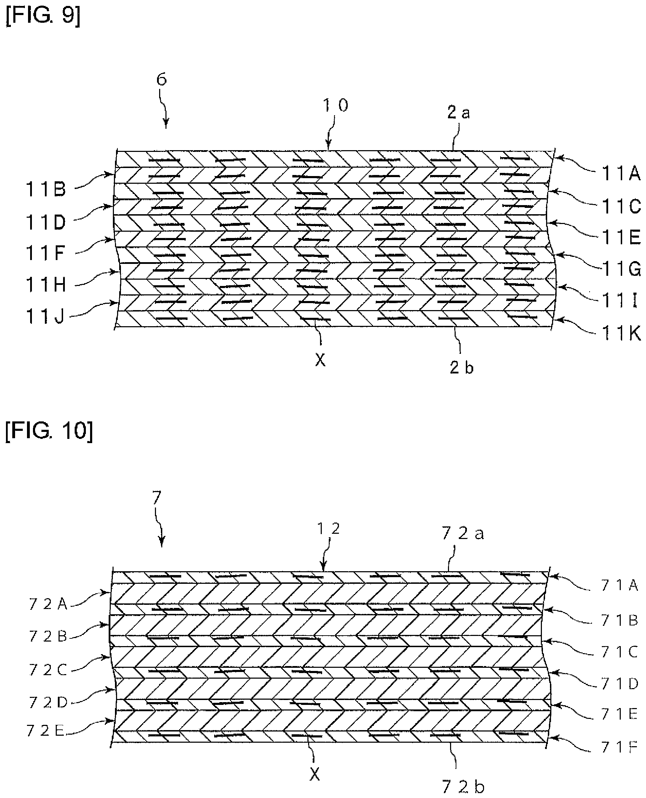

The multilayered resin molded body 6 of the present invention is schematically shown in a cross-sectional view in Figure 9. The multilayered resin molded body 6 shown in Figure 9 is a laminate 10 in which a plurality of first layers 11A to 11K are laminated. The first layers 11A to 11K comprise a filler X. The laminate 10 is formed by laminating at least five first layers 11A to 11K. Specifically, the laminate 10 is formed by laminating eleven first layers 11A to 11K.

The first layers 11A to 11K comprise a thermoplastic resin. The first layers 11A to 11K comprise the filler X. At least one of the first layers 11A to 11K may comprise the filler, or all of the first layers 11A to 11K may comprise the filler. The first layers 11A to 11K are laminated in the thickness direction of the laminate 10. The compositions of the first layers 11A to 11K may be the same or different. The compositions of the first layers 11A to 11K are preferably the same. The compositions of the components of the first layers 11A to 11K other than the filler may be the same or different. The compositions of the components of the first layers 11A to 11K other than the filler are preferably the same.

The multilayered resin molded body 7 of the present invention is schematically shown in a cross-sectional view in Figure 10. The multilayered resin molded body 7 shown in Figure 10 is a laminate 12 in which a plurality of first layers 71A to 71F and 72A to 72E are laminated. The first layers 71A to 71F comprise a filler. The laminate 12 is formed by laminating at least five first layers 71A to 71F and 72A to 72E. Specifically, the laminate 12 is formed by laminating eleven first layers 71A to 71F and 72A to 72E.

The first layers 71A to 71F and 72A to 72E comprise a thermoplastic resin. The first layers 71A to 71F comprise a filler X. At least one of the first layers 71A to 71F may comprise the filler. The first layers 72A to 72E do not comprise a filler. The compositions of the first layers 71A to 71F and 72A to 72E may be the same or different. The compositions of the first layers 71A to 71F and 72A to 72E are preferably the same. The compositions of the first layers 71A to 71F may be the same or different. The compositions of the first layers 71A to 71F are preferably the same. The compositions of the first layers 72A to 72E may be the same or different. The compositions of the first layers 72A to 72E are preferably the same. The compositions of the components of the first layers 71A to 71F other than the filler may be the same or different. The compositions of the components of the first layers 71A to 71F other than the filler are preferably the same.

The first layers 71A to 71F and the first layers 72A to 72E are different in thickness. The thickness of the first layers 71A to 71F is smaller than the thickness of the first layers 72A to 72E. In this manner, the thicknesses of the plurality of first layers may be the same or different. The first layers 71A to 71F having a relatively small thickness, of the first layers 71A to 71F having a relatively small thickness and the first layers 72A to 72E having a relatively large thickness, preferably comprise the filler. The compositions of the first layers 71A to 71F and the first layers 72A to 72E may be the same or different. The first layers 71A to 71F and the first layers 72A to 72E are alternately laminated in the thickness direction of the laminate 12. In other words, the laminate 12 is formed by laminating the first layer 71A, the first layer 72A, the first layer 71B, the first layer 72B, the first layer 71C, the first layer 72C, the first layer 71D, the first layer 72D, the first layer 71E, the first layer 72E, and the first layer 71F in this order. The first layers 72A to 72E are sandwiched between the first layers 71A to 71F. The first layers 72A to 72E are separated from each other by the first layers 71A to 71F, respectively.

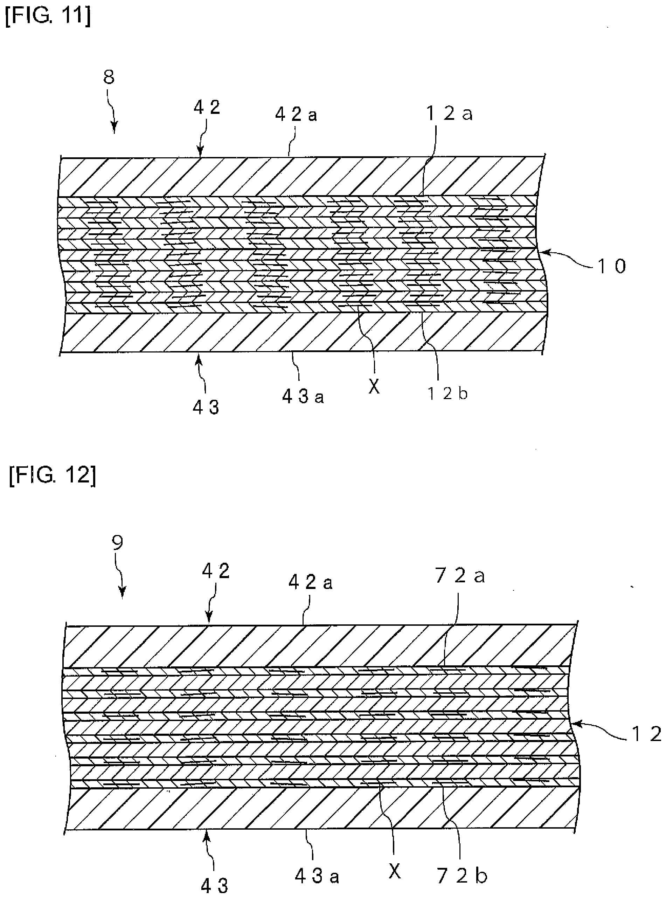

The multilayered resin molded body 8 of the present invention is schematically shown in a cross-sectional view in Figure 11. The multilayered resin molded body 8 shown in Figure 11 comprises the laminate 10 shown in Figure 9, a second layer 42 laminated on the first surface 2a of the laminate 10, and a second layer 43 laminated on the second surface 2b of the laminate 10 opposite to the first surface 2a. The second layers 42 and 43 are surface layers. The compositions of the second layer 42 and the second layer 43 may be the same or different. One second layer 42 may be laminated only on the first surface 2a of the laminate 10, and the second layer 43 may not be laminated on the second surface 2b. It is preferred that two second layers 42 and 43 are laminated on the first surface 2a and second surface 2b of the laminate 10 one by one. The second layers 42 and 43 preferably comprise a thermoplastic resin.

By providing the second layers, the thickness of the second layer can be made larger than that of the first layer. The thickness of the second layer may be larger than the thickness of the first layer. In addition, it is also possible to emboss the outer surfaces of the second layers as required. As the tensile strength of the laminate 10 increases, the tensile strength of the multilayered resin molded body 8 having the laminate 10 and the second layers 42 and 43 increases.

The multilayered resin molded body 9 of the present invention is schematically shown in a cross-sectional view in Figure 12. The multilayered resin molded body 9 shown in Figure 12 comprises the laminate 12 shown in Figure 10, a second layer 42 laminated on the first surface 22a of the laminate 12, and a second layer 43 laminated on the second surface 22b of the laminate 12 opposite to the first surface 22a.

The number of the above first layers laminated in the laminates 10 and 12 is at least 5, preferably 10 or more, more preferably 20 or more, still more preferably 30 or more, particularly preferably 40 or more, and most preferably 80 or more. When the number of the above first layers laminated is large, the tensile strength of the multilayered resin molded bodies 6 to 9 increases. The upper limit of the number of the above first layers laminated in the laminates 10 and 12 can be appropriately changed considering the thickness of the multilayered resin molded bodies 6 to 9, and is not particularly limited. The number of the above first layers laminated in the laminates 10 and 12 may be 20000 or less or 20000 or more. In terms of obtaining the multilayered resin molded bodies 6 to 9 having high transparency, the number of the above first layers laminated is preferably 5000 or less, more preferably 1500 or less, still more preferably 1000 or less, particularly preferably 800 or less, and most preferably 400 or less.

In terms of still further increasing the tensile strength of the multilayered resin molded bodies 6 to 9, the average thickness of the above first layers is preferably 5 nm or more, more preferably 50 nm or more, still more preferably 100 nm or more, particularly preferably 500 nm or more, preferably 200 µm or less, more preferably 100 µm or less, still more preferably 10 µm or less, particularly preferably 5 µm or less, and most preferably 1 µm or less. In terms of still further increasing the tensile strength of the multilayered resin molded bodies 6 to 9, the thickness per layer of the above first layers (each thickness of all first layers) is preferably 50 nm or more, more preferably 100 nm or more, still more preferably 500 nm or more, preferably 40 µm or less, more preferably 5 µm or less, and still more preferably 1 µm or less. The thickness per layer of the above first layers (each thickness of all first layers) may be less than 300 µm, 200 µm or less, or 160 µm or less. The thickness per layer of two first layers positioned at the outermost surfaces of the laminates 10 and 12 is preferably 40 µm or less, more preferably 5 µm or less, and still more preferably 1 µm or less. The thickness per layer of two first layers positioned at the outermost surfaces of the laminates 10 and 12 may be less than 300 µm, 200 µm or less, or 160 µm or less.

The thickness of the laminates 10 and 12 is preferably 0.03 mm or more, more preferably 0.05 mm or more, still more preferably 0.1 mm or more, preferably 3 mm or less, more preferably 1.5 mm or less, and still more preferably 1 mm or less. When the thickness of the laminates 10 and 12 is equal to or more than the above lower limit, the tensile strength of the multilayered resin molded bodies 6 to 9 increases still further. When the thickness of the laminates 10 and 12 is equal to or less than the above upper limit, the transparency of the multilayered resin molded bodies 6 to 9 increases still further.

The thickness of the multilayered resin molded bodies 6 to 9 is preferably 0.03 mm or more, more preferably 0.05 mm or more, still more preferably 0.1 mm or more, preferably 3 mm or less, more preferably 1.5 mm or less, and still more preferably 1 mm or less. When the thickness of the multilayered resin molded bodies 6 to 9 is equal to or more than the above lower limit, the tensile strength of the multilayered resin molded bodies 6 to 9 increases still further. When the thickness of the multilayered resin molded bodies 6 to 9 is equal to or less than the above upper limit, the transparency of the multilayered resin molded bodies 6 to 9 increases still further.

In terms of making the tensile strength of the multilayered resin molded bodies 6 to 9 still better, the thickness per layer of the above second layers (each thickness of all second layers) is preferably 5 nm or more, more preferably 50 nm or more, still more preferably 100 nm or more, particularly preferably 1 µm or more, most preferably 10 µm or more, preferably 1000 µm or less, more preferably 600 µm or less, still more preferably 200 µm or less, particularly preferably 100 µm or less, and most preferably 50 µm or less. The thickness per layer of the above second layers (each thickness of all second layers) may be more than 1 µm, more than 5 µm, more than 40 µm, more than 160 µm, or more than 200 µm.

When the thickness of the above second layer is equal to or more than the above lower limit, the thickness of the multilayered resin molded bodies 6 to 9 is not too large.

When the thickness of the laminates 10 and 12 is T, the thickness of the above second layer is preferably more than 0.2T, more preferably 0.4T or more, preferably 3T or less, more preferably 1T or less, still more preferably 0.8T or less, and particularly preferably 0.6T or less.

At least one of a plurality (five or more) of the above first layers comprises a filler. Thus, the tensile strength of the multilayered resin molded bodies 6 to 9 increases still further. In other words; the use of the filler contributes greatly to an improvement in the tensile strength of the multilayered resin molded bodies 6 to 9. In addition, the above second layers may or may not comprise a filler.

In terms of still further increasing the tensile strength of the multilayered resin molded bodies 6 to 9, the material of the above filler is preferably a carbon material having a graphene structure. Examples of the above carbon material having a graphene structure include carbon nanotubes. In terms of still further increasing the tensile strength of the multilayered resin molded bodies 6 to 9, the material of the above filler is preferably carbon nanotubes.

In addition, in terms of still further increasing the tensile strength of the multilayered resin molded bodies 6 to 9, the aspect ratio of the above filler is preferably more than 1. Further, in terms of still further increasing the tensile strength of the multilayered resin molded bodies 6 to 9, the above filler is preferably a filler that is not spherical, more preferably a rod-shaped filler or a plate-shaped filler, and still more preferably a plate-shaped filler. In order to further increase the tensile strength of the multilayered resin molded bodies 6 to 9, the aspect ratio of the above filler is preferably 1.5 or more, more preferably 2 or more, still more preferably 2.5 or more, and particularly preferably 3 or more.

The above filler that is not spherical is a nonspherical filler. The nonspherical filler, the rod-shaped filler, and the plate-shaped filler each have a length direction. In addition, when the material of the above filler is a carbon material having a graphene structure, such as carbon nanotubes, the filler generally has a length direction.

In the multilayered resin molded bodies 6 to 9 of the present invention, the angle formed by the longitudinal direction of each of the above fillers and a direction that is the average of the longitudinal directions of all of the above fillers is 6° or less, as in the multilayered resin molded body 1.

By controlling the orientation of the above filler to make the above angle equal to or less than the above upper limit, the tensile strength in a direction orthogonal to the lamination direction of the above first layers in the multilayered resin molded bodies 6 to 9 increases considerably. By obtaining the laminates 10 and 12 by a multilayer melt extrusion method using a composition for forming the first layer comprising the thermoplastic resin and the filler, it is easy to make the above angle in the layers comprising the filler equal to or less than the above upper limit.

The above first layer may or may not contain bubbles. The above second layer may or may not contain bubbles. When the above first layer contains bubbles, the average bubble diameter of the bubbles is preferably less than 200 nm. When the above first layer contains bubbles, the expansion ratio is not particularly limited, and is preferably 1.1 times or more. The method for containing bubbles in the above first layer is not particularly limited, and examples thereof include a method using a chemical foaming material, such as azodicarbonimide (ADCA), as a foaming material, and a method using a gas, such as CO₂.

Regarding the above "average bubble diameter," when the bubbles are closed cells and are spherical, the average bubble diameter is obtained from the diameter of the bubble. When the bubbles are closed cells and have a shape other than a spherical shape, the average bubble diameter is obtained from the longest length connecting two points on the outer periphery of the bubble, that is, the maximum diameter. Also, when the bubbles are open cells, the average bubble diameter is obtained from the longest length connecting two points on the outer periphery of the bubble, that is, the maximum diameter. The average bubble diameter shows the average value of the bubble diameters of at least 10 or more bubbles, and is preferably the average value of the bubble diameters of arbitrarily selected 10 bubbles.

The details of each component contained in the multilayered resin molded bodies 6 to 9 according to the present invention will be described below.

### (Thermoplastic Resin)

The above first layer comprises a thermoplastic resin. The above second layer preferably comprises a thermoplastic resin. The thermoplastic resins are not particularly limited. As the thermoplastic resins contained in the above first and second layers, conventionally known thermoplastic resins can be used. Only one thermoplastic resin may be used, or two or more thermoplastic resins may be used in combination.

Examples of the above thermoplastic resins include thermoplastic resins such as polyolefin resins, PET (polyethylene terephthalate) resins, PBT (polybutylene terephthalate) resins, polycarbonate resins, EVA (ethylene-vinyl acetate copolymer) resins, polystyrene resins, vinyl chloride resins, ABS (acrylonitrile-butadiene-styrene copolymer) resins, AS (acrylonitrile-styrene copolymer) resins, polyvinyl acetal resins, thermoplastic elastomers, and (meth)acrylic resins. The above first layer and the above second layer each preferably comprise a polyolefin resin, a polycarbonate resin, an ethylene-vinyl acetate copolymer resin, a polystyrene resin, or a polyvinyl acetal resin. In terms of making the tensile strength still better, the above first layer preferably comprises a polyvinyl acetal resin as the above thermoplastic resin, and more preferably comprises a polyvinyl acetal resin and a plasticizer. In addition, in terms of making the tensile strength still better, the above first layer preferably comprises a polycarbonate resin as the above thermoplastic resin. Polymer compounds may be alloyed or blended with the above thermoplastic resins.

The above polyolefin resins are not particularly limited, and examples thereof include homopolymers, such as ethylene, propylene, or α-olefins, copolymers of ethylene and propylene, copolymers of ethylene and α-olefins, copolymers of propylene and α-olefins, and copolymers of two or more α-olefins. Only one of the above polyolefin resins may be used, or two or more of the above polyolefin resins may be used in combination.

The above α-olefins are not particularly limited, and examples thereof include 1-butene, 1-pentene, 1-hexene, 4-methyl-1-pentene, 1-heptene, and 1-octene.

Examples of the above vinyl chloride resins include homopolymers of vinyl chloride, copolymers of vinyl chloride and polymerizable monomers other than vinyl chloride, polymerizable with the vinyl chloride, and graft copolymers obtained by grafting vinyl chloride polymers onto polymerized resins other than vinyl chloride polymers.

The above polymerizable monomers are not particularly limited as long as they have a reactive double bond. Examples of the above polymerizable monomers include α-olefins, such as ethylene, propylene, and butylene, vinyl esters, such as vinyl acetate and vinyl propionate, vinyl ethers, such as butyl vinyl ether and cetyl vinyl ether, (meth)acrylates, such as methyl (meth)acrylate, ethyl (meth)acrylate, and phenyl (meth)acrylate, aromatic vinyls, such as styrene and α-methylstyrene, vinyl halides, such as vinylidene chloride and vinyl fluoride, and N-substituted maleimides, such as N-phenylmaleimide and N-cyclohexylmaleimide. Only one of the above polymerizable monomers may be used, or two or more of the above polymerizable monomers may be used in combination.

The above polymerized resins are not particularly limited, and examples thereof include ethylene-vinyl acetate copolymers, ethylene-vinyl acetate-carbon monoxide copolymers, ethylene-ethyl (meth)acrylate copolymers, ethylene-methyl (meth)acrylate copolymers, ethylene-propylene copolymers, acrylonitrile-butadiene copolymers, polyurethane resins, chlorinated polyethylene resins, and chlorinated polypropylene resins. Only one of the above polymerized resins may be used, or two or more of the above polymerized resins may be used in combination.

Examples of the above ABS resins include acrylonitrile-butadiene-styrene ternary copolymers.

In addition, in order to improve heat resistance, aromatic vinyls, such as α-methylstyrene, and N-phenylmaleimide may be copolymerized with the above thermoplastic resins.

The above polyvinyl acetal resins are not particularly limited, and examples thereof include polyvinyl butyral resins.

The above thermoplastic elastomers are not particularly limited, and examples thereof include styrene-butadiene elastomers, ethylene-propylene elastomers, and acrylic elastomers.

The molecular weight and molecular weight distribution of the above thermoplastic resins are not particularly limited. The weight average molecular weight of the above thermoplastic resins is preferably 5000 or more, more preferably 20000 or more, preferably 5000000 or less, and more preferably 300000 or less. The molecular weight distribution (weight average molecular weight Mw/number average molecular weight Mn) of the above thermoplastic resins is preferably 2 or more, more preferably 3 or more, preferably 80 or less, and more preferably 40 or less.

The weight average molecular weight (Mw) and the number average molecular weight (Mn) are values obtained using gel permeation chromatography (GPC) and using polystyrene as a standard substance. The weight average molecular weight (Mw) and the number average molecular weight (Mn) mean values measured using a measuring apparatus manufactured by Waters (column: Shodex GPC LF-804 (length 300 mm) manufactured by Showa Denko K.K. × 2, measurement temperature: 40°C, flow velocity: 1 mL/min, solvent: tetrahydrofuran, standard substance: polystyrene).

### (Filler)

As described above, at least one of a plurality (five or more) of the above first layers comprises a filler. Thus, the tensile strength of the multilayered resin molded bodies 6 to 9 increases still further. In addition, the above second layers may or may not comprise a filler.

In terms of still further increasing the tensile strength of the multilayered resin molded bodies 6 to 9, the material of the above filler is preferably a carbon material having a graphene structure.

Preferred examples of the above carbon material include layered graphite, exfoliated graphite, graphite, and carbon nanotubes. The above filler is preferably exfoliated graphite. The above exfoliated graphite is a laminate of a plurality of graphene sheets. The above exfoliated graphite is obtained by subjecting layered graphite to exfoliation treatment, and is a laminate of graphene sheets thinner than layered graphite. The number of graphene sheets laminated in the above exfoliated graphite is 2 or more. The number of graphene sheets laminated in the above exfoliated graphite is preferably smaller than the number of laminated layers in layered graphite, and is preferably 200 or less. The aspect ratio of the above exfoliated graphite is relatively high. Therefore, when the multilayered resin molded bodies 6 to 9 comprise the layer comprising the above filler, the tensile strength in a direction orthogonal to the lamination direction of the above first layers in the multilayered resin molded bodies 6 to 9 increases considerably.

In addition, in terms of still further increasing the tensile strength of the multilayered resin molded bodies 6 to 9, the above filler is preferably a filler that is not spherical, more preferably a rod-shaped filler or a plate-shaped filler, and still more preferably a plate-shaped filler.

The aspect ratio of the above filler is preferably more than 1, more preferably 1.1 or more, still more preferably 2 or more, further preferably 2.5 or more, particularly preferably 3 or more, preferably 500 or less, more preferably 300 or less, still more preferably 100 or less, and particularly preferably 50 or less. When the material of the above filler is a carbon material having a graphene structure, or the above filler is a rod-shaped filler or a plate-shaped filler, the aspect ratio of the above filler is preferably 10 or more, more preferably 90 or more. The above aspect ratio is the ratio of the longitudinal dimension to the transverse dimension. When the material of the above filler is a carbon material having a graphene structure, the above aspect ratio is the ratio of the longitudinal dimension in the graphene sheet lamination plane direction to the transverse dimension in the graphene sheet lamination plane direction. When the above aspect ratio is equal to or more than the above lower limit and equal to or less than the above upper limit, the tensile strength of the multilayered resin molded bodies 6 to 9 increases still further.

When the material of the above filler is a carbon material having a graphene structure, or the above filler is a rod-shaped filler or a plate-shaped filler, the thickness of the layer comprising the above filler is 1 time or more, preferably more than 1 time, more preferably 1.1 times or more, preferably 100 times or less, more preferably 10 times or less, and still more preferably 3 times or less the thickness of the above filler.

In the layer comprising the above filler, the content of the above filler is preferably 0.01 parts by weight or more, more preferably 0.1 parts by weight or more, still more preferably 1 part by weight or more, particularly preferably 2 parts by weight or more, preferably 100 parts by weight or less, more preferably 50 parts by weight or less, still more preferably 20 parts by weight or less, and particularly preferably 10 parts by weight or less, based on 100 parts by weight of the thermoplastic resin.

In addition, in terms of still further increasing the tensile strength of the multilayered resin molded bodies 6 to 9, the laminates 10 and 12 are preferably obtained by stretching, and the laminates 10 and 12 are preferably stretched laminates. The multilayered resin molded bodies 6 to 9 are preferably obtained by stretching the laminates 10 and 12. The ratio at which the laminates 10 and 12 are stretched is not particularly limited. By stretching the laminates 10 and 12, the orientability of the above filler increases, and the average of the absolute values of angles formed by the length directions of the fillers in the layer comprising the filler can be decreased. As a result, the mechanical properties of the multilayered resin molded bodies 6 to 9 increase.

### (Other Components)

The above first and second layers in the multilayered resin molded bodies 6 to 9 according to the present invention may each comprise additives, such as a plasticizer, an ultraviolet absorbing agent, an antioxidant, a light stabilizer, a flame retardant, an antistatic agent, a pigment, a dye, an adhesion-adjusting agent, a moisture-resistant agent, a fluorescent brightening agent, and an infrared absorbing agent, as required.

### (Method for Manufacturing Multilayered Resin Molded Bodies 6 to 9)

The method for manufacturing the multilayered resin molded bodies 6 to 9 according to the present invention is not particularly limited. Examples of the method for manufacturing the multilayered resin molded bodies 6 to 9 according to the present invention include a wet lamination method, a dry lamination method, an extrusion coating method, a multilayer melt extrusion method, a hot melt lamination method, and a heat lamination method.

The multilayered resin molded bodies 6 to 9 according to the present invention are preferably obtained by a multilayer melt extrusion method because the manufacture is easy, and the multilayered resin molded bodies 6 to 9 having still better tensile strength are obtained. Examples of the above multilayer melt extrusion method include a multi-manifold method and a feed block method.

In terms of easily manufacturing the multilayered resin molded bodies 6 to 9 and making the tensile strength still better, the method for manufacturing the multilayered resin molded bodies 6 to 9 according to the present invention preferably comprises the step of molding by a multilayer melt extrusion method the laminates 10 and 12 in which five or more first layers comprising a thermoplastic resin are laminated, and at least one of the plurality of first layers comprises a filler. In terms of still more easily manufacturing the multilayered resin molded bodies 6 to 9 and making the tensile strength still better, the laminates 10 and 12 are preferably molded by a multi-manifold method or a feed block method. In addition, the method for manufacturing the multilayered resin molded bodies 6 to 9 according to the present invention preferably comprises the step of laminating one of the above second layers only on the first surfaces of the laminates 10 and 12, or laminating two of the above second layers on the above first surfaces of the laminates 10 and 12 and second surfaces opposite to the first surfaces one by one.

Next, a method for manufacturing the laminates 10 and 12 in the multilayered resin molded bodies 6 to 9 will be described.

First, a composition for forming a first layer comprising a thermoplastic resin and a filler is prepared. In addition, a composition for forming a second layer is prepared as required. For example, by performing kneading under heating using a twin screw kneader, a twin screw extruder, or the like, the filler can be uniformly dispersed in the thermoplastic resin. Examples of the above twin screw kneader include a plastomill.

When a filler that is exfoliated graphite is uniformly dispersed in a thermoplastic resin, it is preferred that expanded graphite is kneaded with the thermoplastic resin under heating. By melting and kneading the expanded graphite and the thermoplastic resin under heating, the expanded graphite separates into a plurality of exfoliated graphites, and the exfoliated graphites are uniformly dispersed in the thermoplastic resin. The above expanded graphite can be obtained by increasing the interlayer distance of layered graphite by an electrochemical method in which electrolyte ions, such as nitrate ions, are inserted between the layers of layered graphite.

Next, the composition for forming the above first layer is coextruded and molded using a manufacturing apparatus to laminate all or at least some of the above first layers. Specifically, the composition for forming the above first layer is introduced into both of a first extruder (primary extruder) and a second extruder (secondary extruder), and the composition for forming the above first layer is simultaneously extruded from the first extruder and the second extruder. When the composition for forming the above first layer is extruded, the composition for forming the second layer may be extruded. The composition for forming the above first layer extruded from the first extruder and the composition for forming the above first layer extruded from the second extruder are fed to a feed block. In the feed block, the composition for forming the above first layer extruded from the first extruder and the composition for forming the above first layer extruded from the second extruder join so as to overlap alternately. Thus, the composition for forming the above first layer can be laminated.

By containing a filler in one of compositions for forming alternately laminated first layers, a laminate in which layers comprising the filler and layers not comprising the filler are alternately laminated can be obtained. By containing a filler in both of compositions for forming alternately laminated first layers, the laminates 10 and 12 in which layers comprising the filler are laminated can be obtained.

The method for laminating the composition for forming the above first layer is not limited to the above-described method. The composition for forming the above first layer can be laminated by appropriate coextrusion methods and manufacturing apparatuses.

Next, a plurality of multilayering blocks capable of performing division and lamination are attached to a portion downstream of the feed block, and the multilayered resin molded bodies 6 to 9 can be obtained.

The present invention will be clarified below by giving specific Examples of the present invention. The present invention is not limited to the following Examples.

### (Exfoliated Graphite)

Exfoliated graphite used in Examples 2 to 4 and Comparative Examples 2 to 4 was manufactured by the following method.

2.5 g of graphite single crystal powder was supplied to 115 ml of 65 wt% concentrated sulfuric acid, and the obtained mixture was stirred while being cooled with a water bath at 10°C. Next, the mixture obtained by stirring the graphite single crystal powder and the concentrated sulfuric acid was stirred while 15 g of potassium permanganate was gradually added to the mixture, and the mixture was reacted at 35°C over 30 minutes.

Next, 230 g of water was gradually added to the reaction mixture, and the mixture was reacted at 98°C over 15 minutes. Then, 700 g of water and 45 g of a 30 wt% hydrogen peroxide solution were added to the reaction mixture to stop the reaction. The mixture was centrifuged at a rotation speed of 14000 rpm over 30 minutes, and then, the obtained graphite oxide was sufficiently washed with 5 wt% dilute hydrochloric acid and water, and then dried. The obtained graphite oxide was dispersed in water in an amount of 2 mg/ml, and then, the graphite oxide was irradiated with ultrasonic waves over the following time using an ultrasonic washer under the conditions of 45 kHz and 600 W to exfoliate the graphite oxide between its layer interfaces for fragmentation to obtain exfoliated graphite having its layer planes oxidized. Hydrazine was added to the obtained exfoliated graphite having its layer planes oxidized, and the exfoliated graphite was reduced over 10 minutes. The reduced exfoliated graphite was classified using filters having pore sizes of 100 µm, 50 µm, 20 µm, and 10 µm (all manufactured by ADVANTEC) in order from the filter having the largest pore size. Then, the classified exfoliated graphite was dried to obtain exfoliated graphite.

### (Manufacture of Multilayered Molded Bodies)

The multilayered molded bodies of Examples 1 to 10 were manufactured by the following method.

A material for a resin composition layer was extruded by two extruders to form resin composition layers. The extruded resin composition layers were laminated in a feed block to form a laminate. Next, the above laminate was repeatedly folded back for multilayering in a multilayer formation block to obtain a multilayered molded body.

### (Example 1)

100 Parts by weight of polypropylene (trade name: NOVATEC EA9, manufactured by Japan Polypropylene Corporation) and 40 parts by weight of graphite (manufactured by SEC CARBON, LIMITED, high purity graphite, grade "SNO-5," the maximum dimension in the plane direction of the layer planes of graphene layers: 5 µm, the number of laminated layers: 1500, aspect ratio: 10) were melted and kneaded at 200°C by an extruder to manufacture a resin composite composition.

Next, the above resin composite composition was used as a material for a resin composition layer, the above multilayer formation block was adjusted so that the thickness per layer was 1000 nm (2.0 times the thickness of the above exfoliated graphite), and a 300 µm thick, sheet-shaped, multilayered molded body was manufactured by the above manufacturing method.

### (Example 2)

Exfoliated graphite was obtained by the above manufacturing method with an ultrasonic irradiation time of 5 minutes. In the above exfoliated graphite, the maximum dimension in the plane direction of the layer planes of graphene layers was 5 µm, the number of laminated layers was 180, and the aspect ratio was 90.

Next, 100 parts by weight of polypropylene (trade name: NOVATEC EA9, manufactured by Japan Polypropylene Corporation) and 40 parts by weight of the above exfoliated graphite were melted and kneaded at 200°C by an extruder to manufacture a resin composite composition.

Next, the above resin composite composition was used as a material for a resin composition layer, the above multilayer formation block was adjusted so that the thickness per layer was 150 nm (2.5 times the thickness of the above exfoliated graphite), and a 300 µm thick, sheet-shaped, multilayered molded body was manufactured by the above manufacturing method.

### (Example 3)

Exfoliated graphite was obtained by the above manufacturing method with an ultrasonic irradiation time of 10 minutes. In the above exfoliated graphite, the maximum dimension in the plane direction of the layer planes of graphene layers was 5 µm, the number of laminated layers was 90, and the aspect ratio was 180.

Next, 100 parts by weight of polypropylene (trade name: NOVATEC EA9, manufactured by Japan Polypropylene Corporation) and 40 parts by weight of the above exfoliated graphite were melted and kneaded at 200°C by an extruder to manufacture a resin composite composition.

Next, the above resin composite composition was used as a material for a resin composition layer, the above multilayer formation block was adjusted so that the thickness per layer was 100 nm (3.3 times the thickness of the above exfoliated graphite), and a 300 µm thick, sheet-shaped, multilayered molded body was manufactured by the above manufacturing method.

### (Example 4)

Exfoliated graphite was obtained by the above manufacturing method with an ultrasonic irradiation time of 15 minutes. In the above exfoliated graphite, the maximum dimension in the plane direction of the layer planes of graphene layers was 5 µm, the number of laminated layers was 20, and the aspect ratio was 300.

Next, 100 parts by weight of polypropylene (trade name: NOVATEC EA9, manufactured by Japan Polypropylene Corporation) and 40 parts by weight of the above exfoliated graphite were melted and kneaded at 200°C by an extruder to manufacture a resin composite composition.

Next, the above resin composite composition was used as a material for a resin composition layer, the above multilayer formation block was adjusted so that the thickness per layer was 25 nm (3.0 times the thickness of the above exfoliated graphite), and a 300 µm thick, sheet-shaped, multilayered molded body was manufactured by the above manufacturing method.

### (Comparative Examples 1 to 4)

The resin composite products obtained by Examples 1 to 4 were single-layer extruded by an extruder to obtain 300 µm thick, sheet-shaped, single-layered molded bodies.

### (Example 5)

The above multilayer formation block was prepared so that the thickness per layer was 150 nm, and a 300 µm thick, sheet-shaped, multilayered molded body was manufactured by the above manufacturing method, as in Example 2 except that 20 parts by weight of carbon nanotubes (trade name "CTUBE-100" manufactured by CNT Co., Ltd.) were used instead of exfoliated graphite.

### (Comparative Example 5)

The resin composite product obtained in Example 5 was single-layer extruded by an extruder to obtain a 300 µm thick, sheet-shaped, single-layered molded body.

### (Example 6)

The above multilayer formation block was prepared so that the thickness per layer was 150 nm, and a 300 µm thick, sheet-shaped, multilayered molded body was manufactured by the above manufacturing method, as in Example 2 except that 20 parts by weight of carbon nanofibers (trade name "CNF-T" manufactured by MD Nanotech Corporation) were used instead of exfoliated graphite.

### (Comparative Example 6)

The resin composite product obtained in Example 6 was single-layer extruded by an extruder to obtain a 300 µm thick, sheet-shaped, single-layered molded body.

### (Example 7)

The above multilayer formation block was prepared so that the thickness per layer was 1000 nm, and a 300 µm thick, sheet-shaped, multilayered molded body was manufactured by the above manufacturing method, as in Example 1 except that 100 parts by weight of a polyamide (trade name "1300S" manufactured by Asahi Kasei Corporation, flexural modulus: 2.7 GPa, coefficient of linear expansion: 8 × 10⁻⁵/K) and 20 parts by weight of graphite (manufactured by SEC CARBON, LIMITED, high purity graphite, grade "SNO-5," the maximum dimension in the plane direction of the layer planes of graphene layers: 5 µm, the number of laminated layers: 1500, aspect ratio: 10) were used instead of polypropylene.

### (Comparative Example 7)

The resin composite product obtained in Example 7 was single-layer extruded by an extruder to obtain a 300 µm thick, sheet-shaped, single-layered molded body.

### (Example 8)

The above multilayer formation block was adjusted so that the thickness per layer was 150 nm, and a 300 µm thick, sheet-shaped, multilayered molded body was manufactured by the above manufacturing method, as in Example 1 except that 100 parts by weight of a polyamide and 20 parts by weight of exfoliated graphite (the maximum dimension in the plane direction of the layer planes of graphene layers was 5 µm, the number of laminated layers was 90, and the aspect ratio was 180) were used.

### (Comparative Example 8)

The resin composite product obtained in Example 8 was single-layer extruded by an extruder to obtain a 300 µm thick, sheet-shaped, single-layered molded body.

### (Example 9)

The above multilayer formation block was prepared so that the thickness per layer was 1000 nm, and a 300 µm thick, sheet-shaped, multilayered molded body was manufactured by the above manufacturing method, as in Example 1 except that 100 parts by weight of ABS (trade name "S210B" manufactured by UMG ABS, Ltd., flexural modulus: 2.3 GPa, coefficient of linear expansion: 7 × 10⁻⁵/K) and 20 parts by weight of graphite (manufactured by SEC CARBON, LIMITED, high purity graphite, grade "SNO-5," the maximum dimension in the plane direction of the layer planes of graphene layers: 5 µm, the number of laminated layers: 1500, aspect ratio: 10) were used instead of polypropylene.

### (Comparative Example 9)

The resin composite product obtained in Example 9 was single-layer extruded by an extruder to obtain a 300 µm thick, sheet-shaped, single-layered molded body.

### (Example 10)

The above multilayer formation block was prepared so that the thickness per layer was 150 nm, and a 300 µm thick, sheet-shaped, multilayered molded body was manufactured by the above manufacturing method, as in Example 1 except that 100 parts by weight of ABS and 20 parts by weight of exfoliated graphite (the maximum dimension in the plane direction of the layer planes of graphene layers was 5 µm, the number of laminated layers was 90, and the aspect ratio was 180) were used.

### (Comparative Example 10)

The resin composite product obtained in Example 10 was single-layer extruded by an extruder to obtain a 300 µm thick, sheet-shaped, single-layered molded body.

### (Evaluation of Examples and Comparative Examples)

For the multilayered molded bodies obtained by Examples 1 to 10 and the single-layered molded bodies obtained by Comparative Examples 1 to 10, the tensile modulus and the orientation angle of the filler were evaluated by the following procedures.

### (1) Tensile Modulus

The tensile modulus of the multilayered molded bodies obtained by Examples 1 to 10 and the single-layered molded bodies obtained by Comparative Examples 1 to 10 was measured according to JIS K7113. The results are shown in Table 1.

### (2) Orientation Angle of Filler

The multilayered molded bodies obtained by Examples 1 to 10 and the single-layered molded bodies obtained by Comparative Examples 1 to 10 were cut. A photograph of the above cut plane was taken by a scanning electron microscope (SEM), and from the image of the above cut plane, the angle formed by the longitudinal direction of each of the above fillers and a direction that was the average of the longitudinal directions of all of the above fillers was measured. The results are shown in Table 1. Table 1.

**[Table 1]**

| | Resin | Filler | | | Molded body | Evaluation | |
|---|---|---|---|---|---|---|---|
| | | Amount blended | Type | Aspect ratio | One-layer thickness | Filler orientation angle | Tensile modulus |
| | | phr | | - | nm | Degrees | GPa |
| Ex.1 | PP | 40 | Graphene | 10 | 1000 | ± 5.1 | 4.7 |
| Comp.Ex.1 | PP | 40 | Graphene | 10 | Single layer | ± 7.6 | 3.0 |
| Ex.2 | PP | 40 | Graphene | 90 | 150 | ± 4.9 | 6.0 |
| Comp.Ex.2 | PP | 40 | Graphene | 90 | Single layer | ± 8.5 | 3.5 |
| Ex.3 | PP | 40 | Graphene | 180 | 100 | ± 4.8 | 7.0 |
| Comp.Ex.3 | PP | 40 | Graphene | 180 | Single layer | ± 7.3 | 4.0 |
| Ex.4 | PP | 40 | Graphene | 300 | 25 | ± 4.6 | 7.4 |
| Comp.Ex.4 | PP | 40 | Graphene | 300 | Single layer | ± 7.5 | 4.6 |
| Ex.5 | PP | 20 | CNT | 150 | 150 | ± 5.5 | 3.7 |
| Comp.Ex.5 | PP | 20 | CNT | 150 | Single layer | ± 7.6 | 2.5 |
| Ex.6 | PP | 20 | CNF | 150 | 150 | ± 4.8 | 4.1 |
| Comp.Ex.6 | PP | 20 | CNF | 150 | Single layer | ± 7.4 | 2.8 |
| Ex.7 | PA | 20 | Graphene | 10 | 1000 | ± 5.2 | 4.9 |
| Comp.Ex.7 | PA | 20 | Graphene | 10 | Single layer | ± 7.6 | 3.5 |
| Ex.8 | PA | 20 | Graphene | 180 | 150 | ± 4.9 | 6.3 |
| Comp.Ex.8 | PA | 20 | Graphene | 180 | Single layer | ± 7.4 | 4.4 |
| Ex.9 | ABS | 20 | Graphene | 10 | 1000 | ± 5.1 | 4.2 |
| Comp.Ex.9 | ABS | 20 | Graphene | 10 | Single layer | ± 7.5 | 3.0 |
| Ex.1 0 | ABS | 20 | Graphene | 180 | 150 | ± 4.7 | 5.4 |
| Comp.Ex.10 | ABS | 20 | Graphene | 180 | Single layer | ± 7.3 | 3.7 |

As is clear from Table 1, in the multilayered molded bodies of Examples 1 to 10, the orientation angle of the filler is smaller than in the single-layered molded bodies of Comparative Examples 1 to 10. In other words, it is seen that variations in the orientation angles of the fillers are small, and the entire filler is oriented in a more fixed direction. This is considered as the orientability of the entire filler being increased by multilayering the molded bodies of Examples 1 to 10.

In addition, it is seen that in the multilayered molded bodies of Examples 1 to 10, the tensile modulus is higher than in the single-layered molded bodies of Comparative Examples 1 to 10. This is considered as the above orientation angle of the filler decreasing and the orientability of the entire filler being increased, and thus, the mechanical strength of the multilayered molded body being increased.

### (Exfoliated Graphite)

Exfoliated graphite used in Examples 21 to 23 and Comparative Examples 21 to 23 was manufactured by a method similar to the above.

### (Example 21)

Graphite (manufactured by SEC CARBON, LIMITED, high purity graphite, grade "SNO-5," the maximum dimension in the plane direction of the layer planes of graphene layers: 5 µm, the number of laminated layers: 1500, aspect ratio: 10) was used for exfoliated graphite.

Next, 100 parts by weight of polypropylene (trade name: NOVATEC EA9, manufactured by Japan Polypropylene Corporation) and 20 parts by weight of the above exfoliated graphite were melted and kneaded at 200°C by an extruder to manufacture a resin composition.

Next, the above resin composition was press-molded at 190°C under heating by press molding so as to obtain a 0.5 mm thick resin composition sheet. Nine of the above resin composition sheets were obtained by the above press molding, and then, the nine of the above resin composition sheets were press-molded at 190°C by press molding to manufacture a 500 µm thick, sheet-shaped, multilayered resin molded body. The thickness of the resin composition layer per layer in the multilayered resin molded body obtained in this manner was 1000 nm.

### (Example 22)

Exfoliated graphite was obtained by the above manufacturing method with an ultrasonic irradiation time of 10 minutes. In the above exfoliated graphite, the maximum dimension in the plane direction of the layer planes of graphene layers was 5 µm, the thickness dimension was 50 nm, and the aspect ratio was 100.

Next, 100 parts by weight of polypropylene (trade name: NOVATEC EA9, manufactured by Japan Polypropylene Corporation) and 20 parts by weight of the above exfoliated graphite were melted and kneaded at 200°C by an extruder to manufacture a resin composition.

Next, the above resin composition was press-molded at 190°C under heating by press molding so as to obtain a 0.5 mm thick resin composition sheet. 12 Of the above resin composition sheets were obtained by the above press molding, and then, the 12 of the above resin composition sheets were press-molded at 190°C by press molding to manufacture a 500 µm thick, sheet-shaped, multilayered resin molded body. The thickness of the resin composition layer per layer in the multilayered resin molded body obtained in this manner was 100 nm.

### (Example 23)

Exfoliated graphite was obtained by the above manufacturing method with an ultrasonic irradiation time of 15 minutes. In the above exfoliated graphite, the maximum dimension in the plane direction of the layer planes of graphene layers was 5 µm, the thickness dimension was 10 nm, and the aspect ratio was 500.

Next, 100 parts by weight of polypropylene (trade name: NOVATEC EA9, manufactured by Japan Polypropylene Corporation) and 20 parts by weight of the above exfoliated graphite were melted and kneaded at 200°C by an extruder to manufacture a resin composition.

Next, the above resin composition was press-molded at 190°C under heating by press molding so as to obtain a 0.5 mm thick resin composition sheet. 13 Of the above resin composition sheets were obtained by the above press molding, and then, the 13 of the above resin composition sheets were press-molded at 190°C by press molding to manufacture a 500 µm thick, sheet-shaped, multilayered resin molded body. The thickness of the resin composition layer per layer in the multilayered resin molded body obtained in this manner was 50 nm.

### (Comparative Example 21)

A 500 µm thick, sheet-shaped, multilayered resin molded body was manufactured as in Example 21 except that press molding was performed so that the thickness of the resin composition sheet was 0.5 mm, and 10 of the above resin composition sheets were stacked to obtain a multilayered resin molded body sheet.

The thickness of the resin composition layer per layer in the multilayered resin molded body obtained in this manner was 500 nm.

### (Comparative Example 22)

A 500 µm thick, sheet-shaped, multilayered resin molded body was manufactured as in Example 21 except that press molding was performed so that the thickness of the resin composition sheet was 0.5 mm, and 13 of the above resin composition sheets were stacked to obtain a multilayered resin molded body sheet.

The thickness of the resin composition layer per layer in the multilayered resin molded body obtained in this manner was 50 nm.

### (Comparative Example 23)

A 500 µm thick, sheet-shaped, multilayered resin molded body was manufactured as in Example 21 except that press molding was performed so that the thickness of the resin composition sheet was 0.5 mm, and 15 of the above resin composition sheets were stacked to obtain a multilayered resin molded body sheet.

The thickness of the resin composition layer per layer in the multilayered resin molded body obtained in this manner was 10 nm.

### (Example 24)

The above multilayer formation block was prepared so that the thickness per layer was 100 nm, and a 300 µm thick, sheet-shaped, multilayered molded body was manufactured by the above manufacturing method, as in Example 21 except that 20 parts by weight of carbon nanotubes (trade name "CTUBE-100" manufactured by CNT Co., Ltd.) were used instead of exfoliated graphite.

### (Comparative Example 24)

For the resin composite product obtained by Example 24, the above multilayer formation block was prepared so that the thickness per layer was 50 nm, and a resin composite material sheet was obtained.

### (Example 25)

The above multilayer formation block was prepared so that the thickness per layer was 300 nm, and a 300 µm thick, sheet-shaped, multilayered molded body was manufactured by the above manufacturing method, as in Example 21 except that 20 parts by weight of carbon nanofibers (trade name "CNF-T" manufactured by MD Nanotech Corporation) were used instead of exfoliated graphite.

### (Comparative Example 25)

For the resin composite product obtained by Example 25, the above multilayer formation block was prepared so that the thickness per layer was 100 nm, and a resin composite material sheet was obtained.

### (Example 26)

The above multilayer formation block was prepared so that the thickness per layer was 1000 nm, and a 300 µm thick, sheet-shaped, multilayered molded body was manufactured by the above manufacturing method, as in Example 21 except that 100 parts by weight of a polyamide (trade name "1300S" manufactured by Asahi Kasei Corporation, flexural modulus: 2.7 GPa, coefficient of linear expansion: 8 × 10⁻⁵/K) and 20 parts by weight of graphite (manufactured by SEC CARBON, LIMITED, high purity graphite, grade "SNO-5," the maximum dimension in the plane direction of the layer planes of graphene layers: 5 µm, the number of laminated layers: 1500, aspect ratio: 10) were used instead of polypropylene.

### (Comparative Example 26)

For the resin composite product obtained by Example 26, the above multilayer formation block was prepared so that the thickness per layer was 500 nm, and a resin composite material sheet was obtained.

### (Example 27)

The above multilayer formation block was prepared so that the thickness per layer was 100 nm, and a 300 µm thick, sheet-shaped, multilayered molded body was manufactured by the above manufacturing method, as in Example 21 except that 100 parts by weight of a polyamide as in Example 26 and 20 parts by weight of exfoliated graphite (the maximum dimension in the plane direction of the layer planes of graphene layers was 5 µm, the number of laminated layers was 90, and the aspect ratio was 180) were used.

### (Comparative Example 27)

For the resin composite product obtained by Example 27, the above multilayer formation block was prepared so that the thickness per layer was 50 nm, and a resin composite material sheet was obtained.

### (Example 28)

The above multilayer formation block was prepared so that the thickness per layer was 1000 nm, and a 300 µm thick, sheet-shaped, multilayered molded body was manufactured by the above manufacturing method, as in Example 21 except that 100 parts by weight of ABS (trade name "S210B" manufactured by UMG ABS, Ltd., flexural modulus: 2.3 GPa, coefficient of linear expansion: 7 × 10⁻⁵/K) and 20 parts by weight of graphite (manufactured by SEC CARBON, LIMITED, high purity graphite, grade "SNO-5," the maximum dimension in the plane direction of the layer planes of graphene layers: 5 µm, the number of laminated layers: 1500, aspect ratio: 10) were used instead of polypropylene.

### (Comparative Example 28)

For the resin composite product obtained by Example 28, the above multilayer formation block was prepared so that the thickness per layer was 500 nm, and a resin composite material sheet was obtained.

### (Example 29)

The above multilayer formation block was prepared so that the thickness per layer was 100 nm, and a 300 µm thick, sheet-shaped, multilayered molded body was manufactured by the above manufacturing method, as in Example 21 except that 100 parts by weight of ABS as in Example 28 and 20 parts by weight of exfoliated graphite (the maximum dimension in the plane direction of the layer planes of graphene layers was 5 µm, the number of laminated layers was 90, and the aspect ratio was 180) were used.

### (Comparative Example 29)

For the resin composite product obtained by Example 29, the above multilayer formation block was prepared so that the thickness per layer was 50 nm, and a resin composite material sheet was obtained.

### (Evaluation of Examples and Comparative Examples)

For the multilayered resin molded bodies of Examples 21 to 29 and Comparative Examples 21 to 29, the tensile modulus and the state of the layer interfaces were evaluated by the following procedures.

### (1) Tensile Modulus and Rupture Strength

The tensile modulus and rupture strength of the obtained multilayered resin molded body were measured according to JIS K7113-1995. The results are shown in Table 2.

### (2) State of Layer Interfaces

The obtained multilayered resin molded body was cut in the thickness direction orthogonal to the plane direction. Next, a small amount of a polypropylene-polyethylene block copolymer was added to the cut plane of the above multilayered resin molded body to dye the above cut plane. Then, the above cut plane was observed by a 1000x transmission electron microscope (TEM), and the state of the layer interfaces was evaluated according to the evaluation criteria shown below.

Good: there is no rupture or sudden disorder of the layers
Poor: the rupture or sudden disorder of the layers occurs

### (2) Orientation Angle of Filler

The multilayered molded bodies obtained by Examples 21 to 29 and the single-layered molded bodies obtained by Comparative Examples 21 to 29 were cut. A photograph of the above cut plane was taken by a scanning electron microscope (SEM), and from the image of the above cut plane, the angle formed by the longitudinal direction of each of the above fillers and a direction that was the average of the longitudinal directions of all of the above fillers was measured. The results are shown in Table 2.

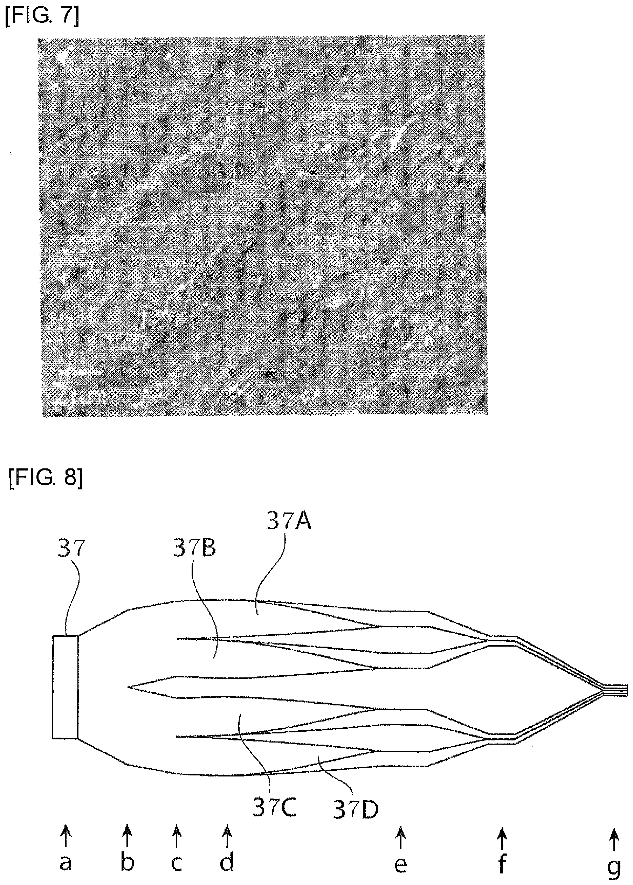

In addition, a cross-sectional photograph of the cut plane of the multilayered resin molded body of Example 22 taken by the 1000x TEM is shown in Figure 6. A cross-sectional photograph of the cut plane of the multilayered resin molded body of Comparative Example 22 taken by the 1000x TEM is shown in Figure 7.

**[Table 2]**

| | Resin | Filler | Filler thickness | Filler aspect ratio | Molded body one-layer thickness | Tensile modulus | Rup ture strength | State of interfaces | Filler orientation angle |
|---|---|---|---|---|---|---|---|---|---|
| | | Type | nm | - | nm | GPa | MPa | TEM image | Degrees |
| Ex. 21 | PP | Graphene | 500 | 10 | 1000 | 4.5 | 34.5 | Good | ±5.1 |
| Ex. 22 | PP | Graphene | 50 | 100 | 100 | 5.3 | 36.4 | Good | ±4.9 |
| Ex. 23 | PP | Graphene | 10 | 500 | 50 | 5.6 | 35.5 | Good | ±4.6 |
| Ex. 24 | PP | CNT | 30 | 150 | 100 | 3.7 | 31.4 | Good | ±5.5 |
| Ex. 25 | PP | CNF | 100 | 150 | 300 | 4.2 | 32.8 | Good | ±4.8 |
| Ex. 26 | PA | Graphene | 500 | 10 | 1000 | 4.9 | 58.6 | Good | ±5.2 |
| Ex. 27 | PA | Graphene | 30 | 180 | 100 | 6.3 | 64.5 | Good | ±4.9 |
| Ex. 28 | ABS | Graphene | 500 | 10 | 1000 | 4.2 | 34.6 | Good | ±5.1 |
| Ex. 29 | ABS | Graphene | 30 | 180 | 100 | 5.4 | 36 | Good | ±4.7 |
| Comp.Ex.21 | PP | Graphene | 500 | 10 | 500 | 3.7 | 30.1 | Poor: Disorder | ±7.1 |
| Comp.Ex.22 | PP | Graphene | 50 | 100 | 50 | 3.6 | 27.7 | Poor: Disorder | ±7.4 |
| Comp.Ex.23 | PP | Graphene | 10 | 500 | 10 | 3.7 | 24.6 | Poor: Disorder | ±7.6 |
| Comp.Ex.24 | PP | CNT | 30 | 150 | 50 | 2.7 | 27 | Poor: Disorder | ±7.3 |
| Comp. Ex.25 | PP | CNF | 100 | 150 | 100 | 2.9 | 28.3 | Poor: Disorder | ±7.1 |
| Comp.Ex.26 | PA | Graphene | 500 | 10 | 500 | 3.4 | 50.4 | Poor: Disorder | ±7.5 |
| Comp. Ex.27 | PA | Graphene | 30 | 180 | 50 | 4.3 | 52 | Poor: Disorder | ±7.4 |
| Comp. Ex.28 | ABS | Graphene | 500 | 10 | 500 | 3.0 | 31.2 | Poor: Disorder | ±7.4 |
| Comp. Ex.29 | ABS | Graphene | 30 | 180 | 50 | 3.7 | 33 | Poor: Disorder | ±7.2 |

In the interface evaluation criteria, a case where a sudden thickness change or the rupture of the layers occurred due to containing the filler was taken as "disorder."

As is clear from Table 2, in the multilayered resin molded bodies of Examples 21 to 29 according to the present invention, the disorder of the resin composition layers constituting the multilayered resin molded body is not seen, and the state of the layer interfaces is good. This is considered to be because the thickness of the above resin composition layer is 2 times to 5 times the thickness of the filler.

On the other hand, in the multilayered resin molded bodies of Comparative Examples 21 to 29, disorder is seen in the layer interfaces, for example, rupture is seen in the resin composition layers constituting the multilayered resin molded body. This is considered to be because the thickness of the above resin composition layer is the same as the thickness of the filler.

In addition, it is seen that in the multilayered resin molded bodies of Examples 21 to 29, the tensile modulus and the rupture strength are significantly higher than in the multilayered resin molded bodies of Comparative Examples 21 to 29. This is considered to be because disorder is not seen in the layer interfaces of the multilayered resin molded bodies of Examples 21 to 29, and the state of the layer interfaces is good.

The multilayered molded bodies of Examples 31 and 32 and Comparative Examples 31 and 32 were manufactured by the following method. A material for a first layer and a material for a second layer were extruded by two extruders to form a first layer and a second layer. The extruded first layer and second layer were laminated in a feed block to manufacture a sheet-shaped multilayered molded body. Next, in a plurality of multilayer formation blocks, the above laminate was divided, and the above divided laminates were further laminated for multilayer molding to obtain a multilayered molded body in which the thickness per layer was 0.3 µm and the number of layers was 900.

### (Example 31)

100 Parts by weight of polypropylene (trade name: NOVATEC EA9, manufactured by Japan Polypropylene Corporation) and 44 parts by weight of exfoliated graphite (manufactured by xGScience, trade name "xGnP," the maximum dimension in the plane direction of the layer planes of graphene layers = 5 µm, the number of laminated layers of graphene: 180, aspect ratio: 90) were melted and kneaded at 230°C to manufacture a resin composite composition. Next, a multilayered molded body was manufactured using the above resin composite composition as a material for a first layer and polypropylene (trade name: NOVATEC EA9, manufactured by Japan Polypropylene Corporation) as a material for a second layer, and using the flow-dividing adapter shown in Figure 4.

In the flow-dividing adapter shown in Figure 4, laminates 36A to 36D are laminated according to the above-described steps I to IV shown in Figure 3. The multilayered molded body was obtained using a plurality of the flow-dividing adapters.

The obtained multilayered molded body comprised 18 parts by weight of graphene based on 100 parts by weight of polypropylene. A No. 1 dumbbell prescribed in JIS K7113 was cut from the molded multilayered molded body as a test piece, and the tensile modulus was measured. The tensile modulus was 2.4 GPa.

### (Example 32)

100 Parts by weight of a high density polyethylene resin (trade name: HF560, manufactured by Japan Polyethylene Corporation) and 44 parts by weight of exfoliated graphite (manufactured by xGScience, trade name "xGnP," the maximum dimension in the plane direction of the layer planes of graphene layers = 5 µm, the number of laminated layers of graphene: 180, aspect ratio: 90) were melted and kneaded at 230°C to manufacture a resin composite composition. Next, a sheet-shaped multilayered molded body was manufactured by the above method using the above resin composite composition as a material for a first layer and a high density polyethylene resin (trade name: HF560, manufactured by Japan Polyethylene Corporation) as a material for a second layer. The obtained multilayered molded body comprised 18 parts by weight of graphene based on 100 parts by weight of the high density polyethylene resin. A No. 1 dumbbell prescribed in JIS K7113 was cut from the molded multilayered molded body as a test piece, and the tensile modulus was measured. The tensile modulus was 2.2 GPa.

### (Example 33)

A composite resin molded body was made as in Example 31 except that a multilayered structure was manufactured by a flow-dividing adapter shown in Figure 8. For the obtained multilayered molded body, when measurement was performed under conditions similar to those of Example 31, the tensile modulus was 2.2 GPa.

The flow-dividing adapter shown in Figure 8 has a supply portion 37 and division portions 37A to 37D connected to the supply portion 37. In Figure 8, in order to show the positions of steps performed in the flow-dividing adapter, the positions at which the steps are performed are shown by arrows a to g. In other words, in the portion from the position a to the position b, a laminate in a heated state is extended in the width direction. At the position b, the laminate is thinner and has a larger width than at the position a. Next, at the position b to the position d, the laminate having its width increased as described above is further extended in the width direction. The laminate is divided into two at the position b, and then divided into two again at the position c. Therefore, the laminate is divided into four. By being sequentially divided in this manner, the resin flow is equally distributed. Therefore, the unevenness of the resin flow is suppressed.

At the position d to the position e, each divided laminate obtained as described above is twisted 90 degrees around the flow direction of the resin flow as the central axis.

At the position e to the position g, the plurality of divided laminates are laminated. More specifically, at the position f, the divided laminates are laminated and integrated two by two. Further, at the position g, the laminates obtained by laminating and integrating the divided laminates two by two are further laminated. In this manner, at the position e to the position g, the lamination step is sequentially carried out. In this case, the adhesiveness between layers can be still further increased, compared with a case where all layers are integrally laminated at a time. Further, the quality in the obtained multilayered laminated structure can also be increased. In Example 33, the multilayered molded body was made as in Example 31 by using the above flow-dividing adapter and repeating a laminated structure a plurality of times.

### (Example 34)

100 Parts by weight of a polyamide (trade name "1300S" manufactured by Asahi Kasei Corporation) and 44 parts by weight of the above exfoliated graphite were melted and kneaded at 270°C to manufacture a resin composite composition. Next, a multilayered molded body was manufactured using the above resin composite composition as a material for a first layer and the above polyamide as a material for a second layer, and using the flow-dividing adapter shown in Figure 4. The obtained multilayered molded body comprised 18 parts by weight of graphene based on 100 parts by weight of polypropylene. A No. 1 dumbbell prescribed in JIS K7113 was cut from the molded multilayered molded body as a test piece, and the tensile modulus was measured. The tensile modulus was 4.2 GPa.

### (Example 35)

100 Parts by weight of ABS (trade name "S210B" manufactured by UMG ABS, Ltd.) and 44 parts by weight of the above exfoliated graphite were melted and kneaded at 130°C to manufacture a resin composite composition. Next, a multilayered molded body was manufactured using the above resin composite composition as a material for a first layer and the above polyamide as a material for a second layer, and using the flow-dividing adapter shown in Figure 4. The obtained multilayered molded body comprised 18 parts by weight of graphene based on 100 parts by weight of ABS. A No. 1 dumbbell prescribed in JIS K7113 was cut from the molded multilayered molded body as a test piece, and the tensile modulus was measured. The tensile modulus was 3.5 GPa.

### (Example 36)

100 Parts by weight of the above polypropylene and 44 parts by weight of carbon nanotubes (manufactured by CNT Co., Ltd., trade name "CTUBE," average outer diameter 25 nm, average length 5 um) were melted and kneaded at 230°C to manufacture a resin composite composition. Next, a multilayered molded body was manufactured using the above resin composite composition as a material for a first layer and the above polypropylene as a material for a second layer, and using the flow-dividing adapter shown in Figure 4. The obtained multilayered molded body comprised 18 parts by weight of graphene based on 100 parts by weight of polypropylene. The tensile modulus was 1.9 GPa.

### (Example 37)

100 Parts by weight of the above polypropylene and 44 parts by weight of carbon nanofibers (manufactured by MD Nanotech Corporation, trade name "CNF-T," average outer diameter: 15 nm, average length: 5 um) were melted and kneaded at 230°C to manufacture a resin composite composition. Next, a multilayered molded body was manufactured using the above resin composite composition as a material for a first layer and the above polypropylene as a material for a second layer, and using the flow-dividing adapter shown in Figure 4. The obtained multilayered molded body comprised 18 parts by weight of graphene based on 100 parts by weight of polypropylene. The tensile modulus was 2.0 GPa.

### (Example 38)

100 Parts by weight of the above polypropylene and 44 parts by weight of carbon fibers (manufactured by West One Corporation, trade name "Milled Carbon Fiber," average outer diameter: 5 um, average length: 100 um) were melted and kneaded at 230°C to manufacture a resin composite composition. Next, a multilayered molded body was manufactured using the above resin composite composition as a material for a first layer and the above polypropylene as a material for a second layer, and using the flow-dividing adapter shown in Figure 4. The obtained multilayered molded body comprised 18 parts by weight of graphene based on 100 parts by weight of polypropylene. The tensile modulus was 1.8 GPa.

### (Comparative Example 31)

100 Parts by weight of polypropylene (trade name: NOVATEC EA9, manufactured by Japan Polypropylene Corporation) and 20 parts by weight of exfoliated graphite (manufactured by xGScience, trade name "xGnP," the maximum dimension in the plane direction of the layer planes of graphene layers = 5 µm, the number of laminated layers of graphene: 180, aspect ratio: 90) were melted and kneaded at 230°C to manufacture a resin composite composition. Next, a sheet-shaped multilayered molded body was manufactured by the above method using the above resin composite composition for both of a material for a first layer and a material for a second layer. A No. 1 dumbbell prescribed in JIS K7113 was cut from the molded multilayered molded body as a test piece, and the tensile modulus was measured. The tensile modulus was 2.4 GPa.

### (Comparative Example 32)

100 Parts by weight of a high density polyethylene resin (trade name: HF560, manufactured by Japan Polyethylene Corporation) and 21 parts by weight of exfoliated graphite (manufactured by xGScience, trade name "xGnP," the maximum dimension in the plane direction of the layer planes of graphene layers = 5 µm, the number of laminated layers of graphene: 180, aspect ratio: 90) were melted and kneaded at 230°C to manufacture a resin composite composition. Next, a sheet-shaped multilayered molded body was manufactured by the above method using the above resin composite composition for both of a material for a first layer and a material for a second layer. A No. 1 dumbbell prescribed in JIS K7113 was cut from the molded multilayered molded body as a test piece, and the tensile modulus was measured. The tensile modulus was 2.2 GPa.

### (Comparative Example 33)

A resin composite material was obtained as in Example 34 except that in Example 34, 21 parts by weight of exfoliated graphite was added, and kneading was performed at 270 degrees. Then, a sheet-shaped multilayered molded body was manufactured by the above method using the above composite resin for both of a first layer and a second layer. The tensile modulus was measured under measurement conditions similar to those of Example 34. The tensile modulus was 4.2 GPa.

### (Comparative Example 34)

A resin composite material was obtained as in Example 35 except that in Example 35, 20 parts by weight of exfoliated graphite was added, and kneading was performed at 130 degrees. Then, a sheet-shaped multilayered molded body was manufactured by the above method using the above composite resin for both of a first layer and a second layer. The tensile modulus was measured under measurement conditions similar to those of Example 35. The tensile modulus was 3.5 GPa.

### (Comparative Example 35)

A resin composite material was obtained as in Example 36 except that in Example 36, 20 parts by weight of carbon nanotubes were added. Then, a sheet-shaped multilayered molded body was manufactured by the above method using the above composite resin for both of a first layer and a second layer. The tensile modulus was measured under measurement conditions similar to those of Example 36. The tensile modulus was 1.9 GPa.

### (Comparative Example 36)

A resin composite material was obtained as in Example 37 except that in Example 37, 21 parts by weight of carbon nanofibers were added. Then, a sheet-shaped multilayered molded body was manufactured by the above method using the above composite resin for both of a first layer and a second layer. The tensile modulus was measured under measurement conditions similar to those of Example 37. The tensile modulus was 2.0 GPa.

### (Comparative Example 37)

A resin composite material was obtained as in Example 38 except that in Example 38, 21 parts by weight of carbon fibers were added. Then, a sheet-shaped multilayered molded body was manufactured by the above method using the above composite resin for both of a first layer and a second layer. The tensile modulus was measured under measurement conditions similar to those of Example 38. The tensile modulus was 1.8 GPa.

As described above, compared with Comparative Examples 31 to 37, in Examples 31, 32, 34 to 38, the number of parts by weight of the exfoliated graphite used decreases by about 10 percent though the tensile modulus is the same. This is considered to be because the exfoliated graphite is unevenly distributed in the first resin composition layer, and therefore, the mechanical strength of the first resin composition layer is increased. Thus, it is considered that the tensile modulus of the entire multilayered resin molded body is increased. The results of the Examples and the Comparative Examples are shown in Table 3.

The multilayered molded bodies obtained by Examples 31 to 38 and the single-layered molded bodies obtained by Comparative Examples 31 to 37 were cut. A photograph of the above cut plane was taken by a scanning electron microscope (SEM), and from the image of the above cut plane, the angle formed by the longitudinal direction of each of the above fillers and a direction that was the average of the longitudinal directions of all of the above fillers was measured. The results are shown in Table 3.

**[Table 3]**

| | Resin | Filler | The number of parts of filler phr | Selective dispersion | Multilayering method | Conformity | Tensile modulus GPa | Filler orientation angle degrees |
|---|---|---|---|---|---|---|---|---|
| Ex. 31 | PP | Exfoliated Gr | 18 | With | Flow-diving adapter method | | 2.4 | ±5.8 |
| Ex. 32 | HDPE | Exfoliated Gr | 18 | With | Flow-dividing adapter method | | 2.2 | ±5.9 |
| Ex. 33 | PP | Exfoliated Gr | 18 | With | Twist adapter method | | 2.2 | ±6.0 |
| Ex. 34 | PA | Exfoliated Gr | 18 | With | Flow-diving adapter method | | 4.2 | ±5.7 |
| Ex. 35 | ABS | Exfoliated Gr | 18 | With | Flow-dividing adapter method | | 3.5 | ±5.8 |
| Ex. 36 | PP | CNT | 18 | With | Flow-diving adapter method | | 1.9 | ±6.0 |
| Ex. 37 | PP | CNF | 18 | With | Flow-diving adapter method | | 2.0 | ±5.9 |
| Ex. 38 | PP | CF | 18 | With | Flow-diving adapter method | | 1.8 | ±5.9 |
| Comp.Ex.31 | PP | Exfoliated Gr | 20 | Without | Flow-dividing adapter method | Ex. 1 | 2.4 | ±6.9 |
| Comp.Ex.32 | HDPE | Exfoliated Gr | 21 | Without | Flow-dividing adapter method | Ex. 2 | 2.2 | ±7.1 |
| Comp.Ex.33 | PA | Exfoliated Gr | 21 | Without | Flow-diving adapter method | Ex. 4 | 4.2 | ±6.8 |
| Comp.Ex.34 | ABS | Exfoliated Gr | 20 | Without | Flow-diving adapter method | Ex. 5 | 3.5 | ±7.0 |
| Comp.Ex.35 | PP | CNT | 20 | Without | Flow-diving adapter method | Ex. 6 | 1.9 | ±7.2 |
| Comp. Ex.36 | PP | CNF | 21 | Without | Flow-dividing adapter method adapter method | Ex. 7 | 2.0 | ±7.2 |
| Comp.Ex.37 | PP | CF | 21 | Without | Flow-diving adapter method | Ex. 8 | 1.8 | ±7.0 |

### (Example 41)

5 Parts by weight of carbon nanotubes (manufactured by Hodogaya Chemical Co., Ltd., diameter: 65 nm, length direction dimension in z direction: 3 µm), a filler, were added to 100 parts by weight of a PC resin (Iupilon E2000 manufactured by MITSUBISHI GAS CHEMICAL COMPANY, INC.), a thermoplastic resin, to obtain a composition A for forming a first layer.

The above composition A for forming a first layer was supplied to a primary extruder. In addition, a PC resin (Iupilon E2000 manufactured by MITSUBISHI GAS CHEMICAL COMPANY, INC.), a thermoplastic resin, was supplied to a secondary extruder. A multilayering feed block was attached to the tips of the primary extruder and the secondary extruder. The total thickness of first layers extruded from the primary extruder and the secondary extruder was set to 800 µm, and further, first layers extruded from the primary extruder and first layers extruded from the secondary extruder were alternately laminated, five first layers in total, to obtain a laminate having a thickness shown in the following Table 1, as a multilayered resin molded body. The number of the first layers comprising the filler was three.

### (Examples 42 to 51)

Multilayered resin molded bodies were obtained as in Example 41 except that the number of the first layers was increased from 5 to 1280 as shown in Table 4 by attaching several multilayering blocks, and the carbon nanotubes used in Example 41 were also added to the secondary extruder to change the amount of the filler blended, as shown in Table 4. In Examples 43, 44, 47, 48, and 50, the carbon nanotubes were not added to the secondary extruder. The number of the first layers comprising the filler in these cases was 6, 12, 24, 48, and 102, respectively.

### (Examples 42 and 43)

Multilayered resin molded bodies were obtained as in Example 41 except that the total thickness of first layers was set to 200 µm, the thickness of second layers was set to 600 µm, the thickness of each of the layers on both sides was 300 µm, and five first layers were laminated in total as shown in Table 4. In Example 43, the multilayered resin molded body was obtained as in Example 41 except that the carbon nanotubes used in Example 41 were also added to the secondary extruder to change the amount of the filler blended, as shown in Table 4.

### (Evaluation)

### (1) Tensile Strength

For tensile strength measurement, according to Determination of tensile properties of Plastics in JIS K7161, a dumbbell type test piece was fabricated, and measurement was performed using Autograph AG-1 manufactured by Shimadzu Corporation.

### (2) Volume Resistance

For the measurement of volume low efficiency, according to conductive plastics with a four-end needle array in JIS K7194, measurement was performed using Loresta GP manufactured by Mitsubishi Chemical Corporation.

### (3) Orientation Angle of Filler

For the obtained multilayered resin molded bodies and single-layered structures, a thin film section in the central portion in the thickness direction was fabricated, and for the thin film section, the filler was observed at a magnification of 10000x using a scanning electron microscope. The average of the absolute values of angles formed by the length directions of all fillers observed in an area 20 µm long by 20 µm wide was measured to calculate the average of the absolute values of angles formed by the length directions of the fillers in the layer comprising the filler with respect to a direction obtained by averaging the length directions of all fillers in the layer comprising the filler. The calculated average value was taken as the orientation angle of the filler.

The results are shown in the following Table 4. In the following Table 4, the amount of the filler blended shows the amount of the filler blended (parts by weight) based on 100 parts by weight of the thermoplastic resin.

**[Table 4]**

| | | | Ex. 41 | Ex. 42 | Ex. 43 | Ex. 44 | Ex. 45 | Ex. 46 | Ex. 47 | Ex. 48 | Ex. 49 | Ex. 50 | Ex. 51 | Ex. 52 | Ex. 53 |
|---|---|---|---|---|---|---|---|---|---|---|---|---|---|---|---|
| The number of first layers | | Layers | 5 | 5 | 10 | 20 | 20 | 30 | 40 | 80 | 80 | 320 | 1280 | 5 | 5 |
| Thickness per layer of first layers | | *µ*m | 160 | 160 | 80 | 40 | 40 | 26.7 | 20 | 10 | 10 | 2.5 | 0.63 | 40 | 40 |
| Amount of filler blended in primary extruder | | Parts by weight | 5 | 5 | 5 | 5 | 5 | 5 | 5 | 5 | 5 | 5 | 5 | 5 | 5 |
| Amount of filler blended in secondary extruder | | Parts by weight | o | 5 | 0 | 0 | 5 | 5 | 0 | 0 | 5 | 0 | 5 | 0 | 5 |
| Thickness of laminate or entire first layers | | *µ*m | 800 | 800 | 800 | 800 | 800 | 801 | 800 | 800 | 800 | 800 | 806 | 200 | 200 |
| Thickness per layer of second layers | | *µ*m | - | - | - | - | - | - | - | - | - | - | - | 300 | 300 |
| Evaluation | (1) Tensile modulus (Mpa) | | 14.4 | 18.1 | 16.2 | 18.8 | 23.7 | 26.1 | 25.2 | 26.8 | 32.9 | 35.4 | 45.8 | 18.4 | 23.1 |
| | (2) Volume resistivity (Ω·cm) | | 492 | 294 | 253 | 127 | 82.9 | 56.3 | 54.1 | 32.3 | 18.2 | 16.2 | 5.7 | 163 | 94.5 |
| | (3) Orientation angle of filler (°) | | 29.8 | 29.3 | 26.5 | 22.4 | 22.9 | 19.8 | 17.1 | 12.6 | 12.4 | 6.2 | 2.8 | 23.2 | 22.7 |

### Reference Signs List

1: multilayered resin molded body
2: multilayered resin molded body
3: multilayered resin molded body
4: multilayered resin molded body
5: multilayered resin molded body
6, 7, 8, and 9: multilayered resin molded bodies
11: resin composition layer
11a: thermoplastic resin
11A to 11K: first layers
12: laminate
15: filler
21: first resin composition layer
22: second resin composition layer
21a and 22a: thermoplastic resins
2a: first surface
2b: second surface
31: laminate
31A, 31B, 31C, and 31D: laminates
32: first layer
33: second layer
34: laminate
36A, 36B, 36C, and 36D: laminates
37: supply portion
37A, 37B, 37C, and 37D: division portions
42 and 43: second layers
42a and 43a: outer surfaces
71A to 71F and 72A to 72E: first layers
72a: first surface
72b: second surface
X: filler

## Claims

1. A multilayered resin molded body comprising a plurality of laminated resin composition layers comprising a thermoplastic resin and a filler comprising a carbon material having a graphene structure, the filler being dispersed in the thermoplastic resin, wherein
an angle formed by a longitudinal direction of each of the fillers and a direction that is an average of longitudinal directions of all of the fillers is 6° or less.

2. The multilayered resin molded body according to claim 1, wherein a thickness per layer of the plurality of resin composition layers is 1 to 3 times a thickness of the filler.

3. The multilayered resin molded body according to claim 1 or 2, wherein an aspect ratio of the carbon material having a graphene structure is in the range of 10 to 500.

4. The multilayered resin molded body according to any one of claims 1 to 3, wherein the carbon material having a graphene structure is at least one selected from the group consisting of exfoliated graphite, carbon fibers, and carbon nanotubes.

5. The multilayered resin molded body according to any one of claims 1 to 4, wherein the thermoplastic resin is at least one selected from the group consisting of polyolefin-based resins, polyamides, and ABS resins.

6. The multilayered resin molded body according to any one of claims 1 to 5, wherein the filler is contained in a proportion of 1 to 50 parts by weight based on 100 parts by weight cf the thermoplastic resin.

7. The multilayered resin molded body according to any one of claims 1 to 6, wherein a shape of the multilayered resin molded body is a sheet shape.

8. The multilayered resin molded body according to any one of claims 1 to 7, wherein a thickness of one of the plurality of resin composition layers, t, is α < t ≤ 15α when the thickness of the filler is α.

9. The multilayered resin molded body according to claim 8, wherein the thickness per layer of the plurality of resin composition layers is in the range of 0.01 µm to 2.0 µm.

10. The multilayered resin molded body according to claims 1 to 7, comprising:
a plurality of first resin composition layers comprising a first thermoplastic resin and a filler comprising a carbon material having a graphene structure, the filler being dispersed in the first thermoplastic resin; and
a plurality of second resin composition layers comprising a second thermoplastic resin as a main component, the plurality of first resin composition layers and the plurality of second resin composition layers being laminated, wherein
a filler comprising a carbon material having a graphene structure is not contained in the second resin composition layer, or X > Y holds when an amount of the filler comprising a carbon material contained in the first resin composition layer is X, and an amount of the filler comprising a carbon material contained in the second resin composition layer is Y.

11. The multilayered resin molded body according to claim 10, wherein the plurality of first resin composition layers and the plurality of second resin composition layers are alternately laminated.

12. The multilayered resin molded body according to claim 10 or 11, wherein the second resin composition layer does not comprise a filler comprising a carbon material having a graphene structure.

13. The multilayered resin molded body according to any one of claims 1 to 7, comprising a laminate comprising five or more laminated first layers comprising a thermoplastic resin, wherein
at least one of the plurality of the first layers comprises a filler.

14. The multilayered resin molded body according to claim 13, wherein a material of the filler is carbon nanotubes.

15. A method for manufacturing the multilayered resin molded body according to any one of claims 1 to 7, comprising the steps of:
preparing a resin composite composition comprising the thermoplastic resin and the filler, the filler being dispersed in the thermoplastic resin;
coextruding the resin composite composition to form a laminate of the resin composition layers; and
dividing the laminate and further laminating the divided laminates.

## Patentansprüche

1. Mehrschichtiger Harzformkörper, umfassend mehrere laminierte Harzzusammensetzungsschichten, die ein thermoplastisches Harz und einen Füllstoff, umfassend ein Kohlenstoffmaterial mit einer Graphenstruktur, umfassen, wobei der Füllstoff im thermoplastischen Harz dispergiert ist, wobei
ein Winkel, der von einer Längsrichtung von jedem der Füllstoffe und einer Richtung, die ein Durchschnitt von Längsrichtungen von allen Füllstoffen ist, gebildet wird, 6° oder weniger beträgt.

2. Mehrschichtiger Harzformkörper nach Anspruch 1, wobei eine Dicke pro Schicht der mehreren Harzzusammensetzungsschichten 1 bis 3 mal eine Dicke des Füllstoffs ist.

3. Mehrschichtiger Harzformkörper nach Anspruch 1 oder 2, wobei ein Aspektverhältnis des Kohlenstoffmaterials mit einer Graphenstruktur im Bereich von 10 bis 500 liegt.

4. Mehrschichtiger Harzformkörper nach irgendeinem der Ansprüche 1 bis 3, wobei das Kohlenstoffmaterial mit einer Graphenstruktur mindestens eines ist, ausgewählt aus der Gruppe, die aus Blähgraphit, Kohlenstofffasern und Kohlenstoff-Nanoröhrchen besteht.

5. Mehrschichtiger Harzformkörper nach irgendeinem der Ansprüche 1 bis 4, wobei das thermoplastische Harz mindestens eines ist, ausgewählt aus der Gruppe, die aus Polyolefin-basierten Harzen, Polyamiden und ABS-Harzen besteht.

6. Mehrschichtiger Harzformkörper nach irgendeinem der Ansprüche 1 bis 5, wobei der Füllstoff in einem Verhältnis von 1 bis 50 Gewichtsteilen, bezogen auf 100 Gewichtsteile des thermoplastischen Harzes, enthalten ist.

7. Mehrschichtiger Harzformkörper nach irgendeinem der Ansprüche 1 bis 6, wobei eine Form des mehrschichtigen Harzformkörpers eine Folienform ist.

8. Mehrschichtiger Harzformkörper nach irgendeinem der Ansprüche 1 bis 7, wobei eine Dicke von einer der mehreren Harzzusammensetzungsschichten, t, α < t ≤ 15α ist, wenn die Dicke des Füllstoffs α ist.

9. Mehrschichtiger Harzformkörper nach Anspruch 8, wobei die Dicke pro Schicht der mehreren Harzzusammensetzungsschichten im Bereich von 0,01 µm bis 2,0 µm liegt.

10. Mehrschichtiger Harzformkörper nach den Ansprüchen 1 bis 7, umfassend:
mehrere erste Harzzusammensetzungsschichten, umfassend ein erstes thermoplastisches Harz und einen Füllstoff, umfassend ein Kohlenstoffmaterial mit einer Graphenstruktur, wobei der Füllstoff in dem ersten thermoplastischen Harz dispergiert ist; und
mehrere zweite Harzzusammensetzungsschichten, umfassend ein zweites thermoplastisches Harz als eine Hauptkomponente, wobei die mehreren ersten Harzzusammensetzungsschichten und die mehreren zweiten Harzzusammensetzungsschichten laminiert sind, wobei
ein Füllstoff, der ein Kohlenstoffmaterial mit einer Graphenstruktur umfasst, nicht in der zweiten Harzzusammensetzungsschicht enthalten ist, oder X > Y gilt, wenn eine Menge des Füllstoffs, umfassend ein Kohlenstoffmaterial, der in der ersten Harzzusammensetzungsschicht enthalten ist, X ist, und eine Menge des Füllstoffs, umfassend ein Kohlenstoffmaterial, der in der zweiten Harzzusammensetzungsschicht enthalten ist, Y ist.

11. Mehrschichtiger Harzformkörper nach Anspruch 10, wobei die mehreren ersten Harzzusammensetzungsschichten und die mehreren zweiten Harzzusammensetzungsschichten abwechselnd laminiert sind.

12. Mehrschichtiger Harzformkörper nach Anspruch 10 oder 11, wobei die zweite Harzzusammensetzungsschicht keinen Füllstoff umfasst, der ein Kohlenstoffmaterial mit einer Graphenstruktur umfasst.

13. Mehrschichtiger Harzformkörper nach irgendeinem der Ansprüche 1 bis 7, umfassend ein Laminat, das fünf oder mehr laminierte erste Schichten umfasst, die ein thermoplastisches Harz umfassen, wobei
mindestens eine der mehreren ersten Schichten einen Füllstoff umfasst.

14. Mehrschichtiger Harzformkörper nach Anspruch 13, wobei ein Material des Füllstoffs Kohlenstoff-Nanoröhrchen ist.

15. Verfahren zur Herstellung des mehrschichtigen Harzformkörpers nach einem der Ansprüche 1 bis 7, umfassend die Schritte:
Herstellen einer Harzverbundzusammensetzung, umfassend das thermoplastische Harz und den Füllstoff, wobei der Füllstoff im thermoplastischen Harz dispergiert ist;
Coextrudieren der Harzverbundzusammensetzung, um ein Laminat der Harzzusammensetzungsschichten zu bilden; und
Teilen des Laminats und weiteres Laminieren der geteilten Laminate.

## Revendications

1. Un corps moulé en résine à plusieurs couches comprenant une pluralité de couches de composition de résine stratifiée comprenant une résine thermoplastique et une charge comprenant un matériau de carbone ayant une structure de graphène, la charge étant dispersée dans la résine thermoplastique,
dans lequel un angle formé par une direction longitudinale de chacune des charges et une direction qui est une moyenne des directions longitudinales de toutes les charges est de 6° ou moins.

2. Le corps moulé en résine à plusieurs couches selon la revendication 1, dans lequel une épaisseur par couche de la pluralité de couches de composition de résine est de 1 à 3 fois l'épaisseur de la charge.

3. Le corps moulé en résine à plusieurs couches selon la revendication 1 ou 2, dans lequel un rapport d'aspect du matériau de carbone ayant une structure de graphène est dans l'intervalle de 10 à 500.

4. Le corps moulé en résine à plusieurs couches selon l'une quelconque des revendications 1 à 3, dans lequel le matériau carboné ayant une structure de graphène est au moins un élément choisi parmi le groupe constitué par le graphite exfolié, les fibres de carbone et les nanotubes de carbone.

5. Le corps moulé en résine à plusieurs couches selon l'une quelconque des revendications 1 à 4, dans lequel la résine thermoplastique est au moins une résine choisie parmi le groupe constitué par les résines à base de polyoléfine, les polyamides et les résines ABS.

6. Le corps moulé en résine à plusieurs couches selon l'une quelconque des revendications 1 à 5, dans lequel la charge est contenue dans une proportion de 1 à 50 parties en poids pour 100 parties en poids de la résine thermoplastique.

7. Le corps moulé en résine à plusieurs couches selon l'une quelconque des revendications 1 à 6, dans lequel une forme du corps moulé en résine à plusieurs couches est une forme de feuille.

8. Le corps moulé en résine à plusieurs couches l'une quelconque des revendications 1 à 7, dans lequel une épaisseur de l'une de la pluralité des couches de composition de résine, t, est α < t ≤ 15α lorsque l'épaisseur de la charge est α.

9. Le corps moulé en résine à plusieurs couches la revendication 8, dans lequel l'épaisseur par couche de la pluralité des couches de composition de résine est comprise entre 0,01 µm et 2,0 µm.

10. Le corps moulé en résine à plusieurs couches selon les revendications 1 à 7, comprenant:
une pluralité de premières couches de composition de résine comprenant une première résine thermoplastique et une charge comprenant un matériau de carbone ayant une structure de graphène, la charge étant dispersée dans la première résine thermoplastique; et
une pluralité de secondes couches de composition de résine comprenant une seconde résine thermoplastique comme composant principal, la pluralité de premières couches de composition de résine et la pluralité de secondes couches de composition de résine étant laminées, dans lequel
une charge comprenant un matériau carboné ayant une structure graphène n'est pas contenue dans la seconde couche de composition de résine, ou X > Y tient quand une quantité de la charge comprenant un matériau carboné contenu dans la première couche de composition de résine est X, et une quantité de charge comprenant un matériau carboné contenu dans la seconde couche de composition de résine est Y.

11. Le corps moulé en résine à plusieurs couches selon la revendication 10, dans lequel la pluralité des premières couches de composition de résine et la pluralité des secondes couches de composition de résine sont stratifiées alternativement.

12. Le corps moulé en résine à plusieurs couches selon la revendication 10 ou 11, dans lequel la seconde couche de composition de résine ne comprend pas de charge comprenant un matériau de carbone ayant une structure de graphène.

13. Le corps moulé en résine à plusieurs couches selon l'une quelconque des revendications 1 à 7, comprenant un stratifié comprenant cinq ou plus premières couches stratifiées comprenant une résine thermoplastique, dans lequel
au moins une de la pluralité des premières couches comprend une charge.

14. Le corps moulé en résine à plusieurs couches selon la revendication 13, dans lequel un matériau de la charge est des nanotubes de carbone.

15. Un procédé pour la fabrication du corps moulé en résine à plusieurs couches selon l'une quelconque des revendications 1 à 7, comprenant les étapes consistant à:
préparer une composition composite de résine comprenant la résine thermoplastique et la charge, la charge étant dispersée dans la résine thermoplastique;
co-extruder la composition composite de résine pour former un stratifié des couches de composition de résine; et
diviser le stratifié et en outre stratifier les stratifiés divisés.
